# EUROPÄISCHE PATENTSCHRIFT

(11) **EP 2 402 140 B1**
(45) Veröffentlichungstag und Bekanntmachung des Hinweises auf die Patenterteilung: **20.04.2016**
(21) Anmeldenummer: 11169404.8
(22) Anmeldetag: 10.06.2011
(51) Int. Cl.: B29C 45/16, B29D 11/00

(54) **Verfahren zum Herstellen einer Kunststofflinse einer Kraftfahrzeugbeleuchtungseinrichtung, nach dem Verfahren hergestellte Kunststofflinse und Werkzeug zur Herstellung der Kunststofflinse**
Method for producing a plastic lens of a motor vehicle lighting device, plastic lens produced according to the method and tool for producing the plastic lens
Procédé de fabrication d'une lentille en matière synthétique d'un dispositif d'éclairage de véhicule automobile, lentille en matière synthétique fabriquée selon ce procédé et outil de fabrication de la lentille en matière synthétique

(30) Priorität: 30.06.2010 DE 102010026423; 10.08.2010 DE 102010033902
(43) Veröffentlichungstag der Anmeldung: 04.01.2012
(73) Patentinhaber: Automotive Lighting Reutlingen GmbH, 72762 Reutlingen (DE)
(72) Erfinder: Pröbstl, Uwe, 73770 Denkendorf (DE)
(74) Vertreter: DREISS Patentanwälte PartG mbB

(56) Entgegenhaltungen:
- EP-A1- 0 928 675
- EP-A1- 1 785 255
- EP-A2- 0 839 636
- DE-A1- 1 930 291
- DE-A1- 3 809 969
- DE-A1- 4 408 426
- DE-A1-102007 011 338
- DE-A1-102007 020 418
- DE-A1-102008 034 153
- JP-A- 9 039 029
- JP-A- 57 069 007
- JP-A- 60 054 822
- JP-A- 60 097 301
- US-A1- 2008 299 340

## Beschreibung

Die vorliegende Erfindung betrifft ein Verfahren zum Herstellen einer Kunststofflinse einer Kraftfahrzeugbeleuchtungseinrichtung mittels Spritzgießen. Außerdem betrifft die Erfindung eine nach diesem Verfahren hergestellte Linse aus Kunststoff. Schließlich betrifft die Erfindung auch ein Werkzeug zur Herstellung einer Kunststofflinse einer Kraftfahrzeugbeleuchtungseinrichtung mittels Spritzgießen. Die Herstellung von derartigen Kunststofflinsen ist aus der DE 3809969, DE 102008034153, JP60077301 und JP60054822 bekannt.

Unter dem Begriff Kunststofflinsen im Sinne der vorliegenden Erfindung werden beliebige Arten von transparenten, optisch wirksamen Elementen verstanden. Insbesondere sollen darunter neben einer Projektionslinse eines Projektionssystems eines Kraftfahrzeugscheinwerfers vor allem in Verbindung mit LED-Lichtquellen auch sogenannte direktabbildende Systeme, mit denen analog zu den Reflektoren herkömmlicher Scheinwerfer mit klarer Abdeckscheibe eine Lichtverteilung für Abblendlicht erzeugt wird, sowie transparente Vorsatzoptiken verstanden werden. Eine Vorsatzoptik bündelt das in sie eingekoppelte Licht durch Brechung an einer Lichteinkoppelfläche und/oder einer Lichtauskoppelfläche und/oder durch Totalreflexion an einer äußeren Grenzfläche der Vorsatzoptik. Der Einsatz der Kunststofflinse in einem beliebigen Lichtmodul (z.B. Projektionsmodul oder Reflexionsmodul) in einer beliebigen Beleuchtungseinrichtung (z.B. Schienwerfer oder Leuchte) eines Kraftfahrzeugs ist denkbar. Nachfolgend wird insbesondere auf das Beispiel einer Projektionslinse eines Projektionsmoduls eines Fahrzeugscheinwerfers eingegangen. Die Erfindung ist jedoch keinesfalls darauf beschränkt.

Aus dem Stand der Technik sind Projektionsmodule für Kraftfahrzeugscheinwerfer bekannt. Diese umfassen in der Regel mindestens eine Lichtquelle zum Aussenden von elektromagnetischer Strahlung, insbesondere in Form von für das menschliche Auge sichtbarem Licht. Als Lichtquelle kann bspw. eine Glühlampe, eine Gasentladungslampe, oder eine Halbleiterlichtquelle (z.B. Leuchtdioden, LEDs) eingesetzt werden. Das ausgesandte Licht wird mittels mindestens einer Primäroptik gebündelt. Die Primäroptik kann als ein herkömmlicher Reflektor oder als eine Vorsatzoptik ausgebildet sein. Eine Vorsatzoptik besteht aus einem Licht durchlässigen Material, insbesondere aus transparentem Kunststoff. Durch die Vorsatzoptik hindurchtretendes Licht wird mittels Totalreflexion an den äußeren Grenzflächen der Vorsatzoptik und/oder durch Brechung an den Lichteinkoppel- bzw. Lichtauskoppelflächen der Vorsatzoptik gebündelt. Die gebündelte Strahlung wird durch eine Sekundäroptik zur Erzeugung einer gewünschten Lichtverteilung auf die Fahrbahn vor das Kraftfahrzeug projiziert. Die Sekundäroptik ist bspw. als eine Projektionslinse ausgebildet. Falls die gewünschte Lichtverteilung eine Helldunkelgrenze aufweisen soll, ist zwischen der Primäroptik und der Sekundäroptik eine Blendenanordnung angeordnet, die zumindest teilweise in den Strahlengang ragt. Eine im Strahlengang befindliche horizontale und/oder vertikale Kante der Blendenanordnung wird durch die Sekundäroptik als horizontale bzw. vertikale Helldunkelgrenze der Lichtverteilung auf die Fahrbahn projiziert.

Bisher waren Projektionslinsen üblicherweise aus Glas gefertigt. Der Grund dafür waren einerseits die relativ hohen Temperaturen, die in den Linsen während des Betriebs des Projektionsmoduls auftreten können. Praktisch die gesamte Menge des die Lichtverteilung erzeugenden Lichts muss durch die relativ kleine, optisch wirksame Fläche der Projektionslinse hindurchtreten, was zu hohen Temperaturen in der Linse führen kann. Diese hohen Temperaturen können in Kunststoff mit der Zeit Verformungen und/oder Verfärbungen des Materials hervorrufen, was offensichtlich bei Fahrzeugscheinwerfern nicht auftreten darf. In Projektionsmodulen neuerer Bauart, in denen Halbleiterlichtquellen, insbesondere Leuchtdioden (LEDs), als Lichtquellen eingesetzt werden, sind die während des Betriebs in der Linse auftretenden Temperaturen geringer als in herkömmlichen Projektionsmodulen, die Glühlampen oder Gasentladungslampen als Lichtquellen verwenden, so dass dort theoretisch Kunststofflinsen eingesetzt werden können. Darüber hinaus sind Projektionsmodule mit Gasentladungslampen als Lichtquellen in der Entwicklung, welche mit gegenüber herkömmlichen Gasentladungslampen verringerter Leistung betrieben werden und durch Optimierung der optischen Eigenschaften des Moduls trotzdem noch eine ausreichend helle Lichtverteilung erzeugen können. Auch bei diesen zukünftigen Projektionsmodulen wäre ein Einsatz von Kunststofflinsen denkbar. Darüber hinaus können Kunststofflinsen in beliebig anderen Lichtmodulen eingesetzt werden.

Andererseits wurde bisher meistens auf Glaslinsen zurückgegriffen, da diese einfacher und kostengünstiger herzustellen sind als Kunststofflinsen. Ein Hauptproblem bei der Herstellung von Kunststofflinsen sind die großen Abmessungen, insbesondere die große Dicke der Linsen entlang der optischen Achse im Zentrum der Linsen. Außerdem ist es problematisch, dass die Dicke der Linsen ausgehend von der optischen Achse zum äußeren Linsenrand hin sehr stark variiert. Die großen Dicken der Projektionslinsen erforderten bisher ein sehr langsames und zeitaufwendiges Spritzgießen der Linsen. Dies ist bspw. bei der Herstellung von Abdeckscheiben für Fahrzeugscheinwerfer anders, da diese eine relativ geringe, über die gesamte Fläche weitgehend konstante Dicke aufweisen.

Wenn eine Kunststofflinse zu schnell gespritzt wird, kann es zu Lufteinschlüssen in der Linse kommen, die zu verschlechterten optischen Eigenschaften der Linse führt. Nach dem Spritzen kann die Anhäufung von Kunststoff, insbesondere im Bereich der optischen Achse der Linse, beim Abkühlen zu Materialschwindung bzw. Materialschwund führen, d.h. es bilden sich Einfallstellen oder Vertiefungen auf der Linsenoberfläche. Dies kann nur durch langsames Abkühlen und ständiges Nachspritzen von Material während der Abkühlphase vermieden werden. Das wiederum hat den Nachteil, dass es in der Linse aufgrund der sequenziellen Aushärtung des zuerst gespritzten Materials und des nachgespritzten Materials zu sichtbaren Fließlinien kommt. Schließlich kann ein zu schnelles Entformen der gespritzten Projektionslinse zu sog. Vakuolen (mikrozellige bis blasenförmige Hohlräume im Inneren des Werkstücks) führen, die mit bloßem Auge als ein milchiger Schleier in der Linse zu erkennen sind.

Zusammenfassend kann also gesagt werden, dass die Herstellung von Projektionslinsen aus Kunststoff nach dem bisher bekannten Spritzgussverfahren technisch sehr aufwendig und vor allem sehr zeitaufwendig ist. Bei einer Linse mit einer maximalen Dicke im Bereich der optischen Achse von etwa 30 mm muss mit Zykluszeiten von etwa 18 Minuten gerechnet werden, um eine Kunststofflinse mit der geforderten Genauigkeit hinsichtlich Form und Abmessungen und in der gewünschten Oberflächenqualität herstellen zu können.

Kunststofflinsen können außer durch Spritzgießen theoretisch auch mittels Spritzprägen hergestellt werden. Dabei wird während des Aushärtens des gespritzten Materials nicht - wie beim Spritzgießen - zusätzliches Material nachgespritzt. Stattdessen wird zunächst mehr Kunststoff als benötigt in die Kavität der Gussform gegeben, und dann ein Prägestempel während des Aushärtens immer tiefer auf das Material herabgesenkt, so dass der Prägestempel schließlich bei vollständig ausgehärtetem Material seine Endposition erreicht hat und die Linse in der gewünschten Form und Qualität ausgehärtet ist. Diese Herstellungsart hat jedoch den Nachteil, dass sie sehr aufwendig ist und nur für bestimmte Linsenformen, insbesondere nur für bestimmte Konturen der Linsenoberflächen, eingesetzt werden kann. Außerdem lässt sich dadurch lediglich eine geringe Verringerung der Zykluszeiten erreichen.

Ausgehend von dem beschriebenen Stand der Technik liegt der vorliegenden Erfindung deshalb die Aufgabe zugrunde, die Herstellung von Kunststofflinsen zu verbessern, insbesondere die Zykluszeiten zu verringern.

Zur Lösung dieser Aufgabe wird ein Verfahren nach Anspruch 1 vorgeschlagen

Erfindungsgemäß wird also zunächst ein Rohling der Kunststofflinse gespritzt, der eine geringere Abmessung, insbesondere eine geringere Dicke, als die fertige Linse aufweist. Bereits aufgrund der geringeren Dicke des Werkstücks, kann der Rohling schneller gespritzt werden, schneller abkühlen und schneller entformt werden. Darüber hinaus kann der Rohling auch deshalb schneller gespritzt werden, da er von minderer Qualität ist. Das bedeutet, dass der gespritzte Rohling keinen besonders hohen Qualitätsanforderungen hinsichtlich Form, Abmessungen und/oder Oberflächenbeschaffenheit genügen muss. Die gewünschte Qualität der fertigen Kunststofflinse wird erfindungsgemäß erst in einem nachfolgenden Prozesstakt durch Umspritzen zumindest eines Teils des Rohlings erzielt. Das bedeutet für den Rohling, dass dieser Einfallstellen, Vertiefungen bzw. Krater aufgrund von Materialschwindung, Kratzer oder ähnliches auf der Linsenoberfläche sowie beliebig andere die Qualität der fertigen Kunststofflinse beeinträchtigende Fehler auf seiner Oberfläche aufweisen kann. Es genügt also völlig, wenn der Rohling mit minderer Qualität hergestellt wird. Aufgrund der geringen Qualitätsanforderungen an den Rohling, kann dieser in einer erheblich verkürzten Zykluszeit hergestellt werden.

Nach der Fertigung des Rohlings minderer Qualität wird dieser dann in mindestens einem nachfolgenden weiteren Prozesstakt zumindest bereichsweise mit einer zusätzlichen Schicht aus Kunststoff umspritzt, so dass die fertige Kunststofflinse zumindest in dem umspritzten Bereich die gewünschte Qualität hinsichtlich Form, Abmessungen und/oder Oberflächenbeschaffenheit erhält. Die Dicke der umspritzten Schicht ist relativ gering, so dass die Größe möglicher Materialschwindungen ebenfalls gering ist. Jedenfalls sind die Materialschwindungen in der umspritzten Schicht deutlich geringer als wenn - wie im Stand der Technik üblich - die gesamte Kunststofflinse in einem einzigen Prozesstakt auf einmal gespritzt würde. Durch eine geringfügige Verzögerung der Abkühlgeschwindigkeit des umspritzten Rohlings können die Materialschwindungen auf ein Minimum reduziert und sogar ganz verhindert werden.

Das den Rohling umgebende, im weiteren Prozesstakt gespritzte Kunststoffmaterial legt sich nahtlos um die Oberflächen des Rohlings. Das umspritzende Kunststoffmaterial dringt selbst in kleinste Vertiefungen, wie bspw. Kratzer oder Oberflächensplitterungen, an der Oberfläche des Rohlings ein und gleicht auch kleinste Unebenheiten, wie bspw. Grate oder Bindenähte, aus. Die Kunststofflinse kann so gefertigt werden, dass nicht erkennbar ist, dass diese in einem mehrere Prozesstakte umfassenden Verfahren zunächst als Rohling minderer Qualität und dann durch Umspritzen mit mindestens einer zusätzlichen Kunststoffschicht hergestellt wurde.

Die Herstellung der Kunststoffprojektionslinse nach dem erfindungsgemäßen Verfahren umfassend mindestens zwei Prozesstakte führt zu einer deutlichen Verringerung der Zykluszeiten. Derzeit können für die Herstellung von Projektionslinsen mit einer Dicke im Bereich der optischen Achse von etwa 30 mm Zykluszeiten im Bereich von sechs Minuten erzielt werden, was in etwa einer Verringerung auf 1/3 der nach dem bisherigen Verfahren benötigten Zeit entspricht. Eine weitere Verkürzung der Zykluszeiten durch Optimierung des erfindungsgemäßen Verfahrens ist möglich.

Es ist denkbar, das in dem mindestens einen weiteren Prozesstakt vorgesehene Umspritzen des Rohlings auf diejenigen Bereiche des Rohlings zu beschränken, wo erwartungsgemäß oder bekanntermaßen Qualitätseinbußen hinsichtlich Form, Abmessungen und/oder Oberflächenbeschaffenheit auftreten, bspw. auf zentrale Bereich in der Nähe der optischen Achse der fertigen Linse an der Vorder- und/oder Rückseite des Rohlings. Es ist ebenfalls denkbar, den mindestens einen weiteren Prozesstakt auf die optisch wirksamen Bereiche der fertigen Kunststofflinse zu beschränken, um definierte optische Eigenschaften der fertigen Linse zu gewährleisten. Für über den optisch wirksamen Bereich der Linse hinausstehende Teile, wie bspw. ein umlaufender Rand, Auflage- oder Befestigungsabschnitte zur Befestigung eines Linsenhalters, eines Reflektors und/oder einer Beleuchtungseinrichtung, kann die Qualität des Rohlings durchaus ausreichend sein. Ebenso ist es denkbar, zumindest einen der weiteren Prozesstakte zum Anformen von Funktionsteilen, wie bspw. Ösen, Schnapphaken, Dome, Auflageflächen, etc., an den Rohling vorzusehen. Ein solcher weiterer Prozesstakt könnte bspw. zwischen dem ersten Prozesstakt zum Fertigen des Rohlings und einem letzten Prozesstakt, um der Kunststofflinse bzw. zumindest dem optisch wirksamen Bereich der Linse die gewünschte Qualität zu geben, eingefügt sein. Selbstverständlich ist es auch denkbar, im Anschluss an den ersten Prozesstakt zur Fertigung des Rohlings mehrere nacheinander ausgeführte weitere Prozesstakte vorzusehen, wobei in jedem der Prozesstakte ein bestimmter Bereich der fertigen Kunststofflinse mit der gewünschten Qualität hinsichtlich Form, Abmessungen und/oder Oberflächenbeschaffenheit versehen wird.

Ein weiterer Vorteil des erfindungsgemäßen Verfahrens besteht darin, dass aufgrund der Herstellung der Kunststofflinse in mehreren nacheinander ausgeführten Prozesstakten in mindestens einem weiteren Prozesstakt außen an den Rohling beliebige Funktionsteile (bspw. Ösen, Schnapphaken, Dome, Auflageflächen, ein radial oder axial zur optischen Achse der Linse von dieser abstehender umlaufender Rand etc.) angespritzt werden können. Im Rahmen des mindestens einen weiteren Prozesstaktes können also nicht nur die bei der Herstellung des Rohlings am Rohling bzw. seiner Oberfläche entstandenen Fehler und Unzulänglichkeiten korrigiert werden, sondern auch zusätzliche Funktionsteile angespritzt werden.

Aufgrund der geringen Dicke des Rohlings bzw. der zusätzlich aufgespritzten Schicht, die pro Prozesstakt gespritzt wird, können nahezu beliebige Formen und Konturen der Kunststofflinse hergestellt werden. Darüber hinaus wäre es denkbar, in dem mindestens weiteren Prozesstakt den Rohling mit einer zusätzlichen Schicht aus einem Kunststoff mit anderen Eigenschaften als der Kunststoff des Rohlings zu umspritzen. Die anderen Eigenschaften des Kunststoffes können sich auf die Farbe des Kunststoffes beziehen, so dass bspw. ein schwarzer radialer oder axialer Rand außen um die Projektionslinse angespritzt werden kann, der als Linsenhalterung dient und bspw. in eine entsprechende Aufnahme im Projektionsmodul nur noch eingeklipst oder in sonstiger Weise einfach und schnell befestigt werden muss.

Es wäre aber auch denkbar, dass sich die anderen Eigenschaften des Kunststoffs auf unterschiedliche Materialien beziehen, so dass für das Spritzen des Rohlings und für das Umspritzen des Rohlings mit der zusätzlichen Kunststoffschicht verschiedene Kunststoffe verwendet werden. In diesem Fall sollte sichergestellt sein, dass die umspritzten Oberflächen des Rohlings bestimmten Qualitätsanforderungen genügen, da es sonst am Übergang zwischen den beiden Kunststoffarten, also zwischen Rohling und der zusätzlich aufgespritzten Schicht, zu einer undefinierten Brechung des hindurchtretenden Lichts kommen kann. Damit diese Brechung vorgegebenen, definierten Werten genügt, muss die entsprechende Oberfläche des Rohlings eine definierte Kontur und Oberflächenbeschaffenheit aufweisen.

Selbstverständlich wäre es denkbar, den Rohling und eine erste zusätzliche Schicht mit dem gleichen Kunststoff in dem ersten und einem weiteren Prozesstakt zu spritzen. Der auf diese Weise gefertigte umspritzte Rohling erfüllt definierte Qualitätsanforderungen hinsichtlich Form, Abmessungen und/oder Oberflächenbeschaffenheit. Anschließend könnte in noch einem weiteren Prozesstakt eine weitere Schicht aus einem anderen Kunststoff (bspw. mit anderen optischen Eigenschaften) zumindest auf Teilbereiche des umspritzten Rohlings aufgespritzt werden.

Gemäß der vorliegenden Erfindung wird vorgeschlagen, dass der Rohling in dem ersten Prozesstakt mit einem äußeren, über einen optisch wirksamen Bereich der fertigen Kunststofflinse hinausragenden umlaufenden Rand gespritzt wird, der in dem nachfolgenden mindestens einen weiteren, Prozesstakt zur Halterung und Positionierung des Rohlings in einer auszuspritzenden Kavität eines Formwerkzeugs genutzt wird.

Als "optisch wirksamer Bereich" wird ein Bereich der fertigen Kunststofflinse verstanden, durch den beim Einsatz der Kunststofflinse in einem Lichtmodul einer Kraftfahrzeugbeleuchtungseinrichtung Licht hindurchtritt. Dieser Bereich kann auch als die "eigentliche Linse" bezeichnet werden. Die optisch wirksamen Bereiche einer Projektionslinse sind also die Bereiche der Linse, die an der Bildung der gewünschten Lichtverteilung auf der Fahrbahn vor dem Fahrzeug beteiligt sind. Im Gegensatz zu dem optisch wirksamen Bereich der Linse tritt während der Verwendung der Projektionslinse in einem Projektionsmodul durch den umlaufenden Rand kein oder nahezu kein Licht hindurch. Es ist allenfalls denkbar, dass bei der Verwendung der Projektionslinse Licht aus dem optisch wirksamen Bereich in den umlaufenden Rand gelenkt und aus diesem ausgekoppelt wird, bspw. in Lichtaustrittsrichtung des Lichtmoduls. Dadurch kann jedoch allenfalls eine subjektive Vergrößerung des äußeren Erscheinungsbilds der Projektionslinse bei eingeschalteter Lichtquelle des Lichtmoduls erzielt werden (Vermeidung eines "hot spots") und eine Blendung entgegenkommender Verkehrsteilnehmer verhindert werden. Das den umlaufenden Rand verlassende Licht liefert jedoch keinen bzw. kaum einen Beitrag zu der eigentlichen durch das Projektionsmodul erzeugten Lichtverteilung auf der Fahrbahn vor dem Fahrzeug oder auf einem vor dem Scheinwerfer angeordneten Messschirm.

Der Rohling kann in dem ersten Prozesstakt problemlos mit dem umlaufenden Rand gespritzt werden, da die Gesamtdicke des Rohlings relativ gering ist und somit einen erheblichen Freiheitsgrad beim Anspritzen von Funktionsteilen, wie bspw. des umlaufenden Rands, gewährt. Der Rohling wird dann derart in einer in einem nachfolgenden Prozesstakt auszuspritzenden Kavität eines Formwerkzeugs eingesetzt, dass der Rohling mittels des umlaufenden Rands in der Kavität positioniert und gehalten werden kann. Auf diese Weise kann eine genaue, sichere und zuverlässige Positionierung und Halterung des Rohlings in der Kavität sichergestellt werden, was eine notwendige Voraussetzung für die hochgenaue und qualitativ hochwertige Ausführung des nachfolgenden Umspritzens des Rohlings mit Kunststoffmaterial ist.

Gemäß der vorliegenden Erfindung wird vorgeschlagen, dass der Rohling in dem ersten Prozesstakt mit einem äußeren, über einen optisch wirksamen Bereich der fertigen Kunststofflinse hinausragenden umlaufenden Rand gespritzt wird, der in dem nachfolgenden mindestens einen weiteren Prozesstakt für eine Unterteilung einer auszuspritzenden Kavität in eine erste an der Vorderseite des Rohlings angeordnete Teilkavität und eine weitere an der Rückseite des Rohlings angeordnete Teilkavität genutzt wird.

Diese Ausführungsform setzt voraus, dass der umlaufende Rand die eigentliche Kunststofflinse ohne Unterbrechung umgibt, um eine Unterteilung der Kavität in vordere und rückwärtige Kavität sicherzustellen. Alternativ wird die Kavität bei in die Kavität eingesetztem Rohling durch den lediglich um eine Teil des Rohlings umlaufenden Rand im Zusammenwirken mit entsprechenden in oder an der Kavität ausgebildeten, den umlaufenden Rand ergänzenden Randbereichen, in eine vordere und eine rückwärtige Teilkavität unterteilt. Durch diese Unterteilung der Kavität ist es möglich, das Kunststoffmaterial zum Umspritzen des Rohlings getrennt nach Vorderseite und Rückseite auf den Rohling aufzubringen. Dabei kann der Spritzgussprozess sowohl für die Vorderseite als auch für die Rückseite der Kunststofflinse jeweils individuell optimiert werden. Das Umspritzen des Rohlings kann bspw. nach Vorder- und Rückseite getrennt in Abhängigkeit von der eingespritzten Materialmenge oder in Abhängigkeit von der Einspritzzeit während des zweiten Prozesstaktes geregelt werden. Auf diese Weise kann sowohl die Vorderseite als auch die Rückseite der Kunststofflinse optimal hinsichtlich der Form, der Abmessungen, des Oberflächenverlaufs und/oder der Oberflächeneigenschaften der Linse ausgebildet werden. Dadurch können selbst bei gegenüber bekannten Spritzgussverfahren für Kunststofflinse deutlich verringerten Zykluszeiten qualitativ sehr hochwertige Kunststofflinse hergestellt werden.

Der Rohling wird in dem mindestens einen weiteren Prozesstakt gleichzeitig von einer Vorderseite und einer Rückseite des Rohlings zumindest bereichsweise mit einer zusätzlichen Schicht aus Kunststoff umspritzt. Auf diese Weise kann die Zykluszeit für die Fertigung einer Kunststofflinse nach dem erfindungsgemäßen Verfahren weiter reduziert werden, da gleichzeitig sowohl die Vorderseite als auch die Rückseite des Rohlings in dem zweiten Prozesstakt mit Kunststoffmasse umspritzt werden und aushärten können.

Die vorliegende Erfindung betrifft auch Kunststofflinsen für den Einsatz in einem Lichtmodul einer Kraftfahrzeugbeleuchtungseinrichtung (Scheinwerfer oder Leuchte), die nach dem erfindungsgemäßen Verfahren hergestellt worden sind. Vorteilhaft an den erfindungsgemäßen Kunststofflinsen ist die verkürzte Zykluszeit, die für deren Herstellung erforderlich ist, was zu deutlich geringeren Herstellungskosten führt, sowie deren verbesserte Qualität. Die verbesserte Qualität ergibt sich bspw. durch die hochgenauen Oberflächenverläufe der Linse, da aufgrund der geringen Dicke des den Rohling im zweiten Prozesstakt umspritzenden Kunststoffmaterials die Schwindung bzw. der Materialschwund beim Abkühlen deutlich verringert werden kann.

Wenn man bspw. davon ausgeht, dass der Rohling eine Dicke von 12 mm aufweist und auf diesen dann an der Vorderseite und an der Rückseite jeweils eine Kunststoffschicht von etwa 6 mm Dicke im Bereich der optischen Achse der Linse angespritzt wird, ergibt sich eine Kunststofflinse mit einer Gesamtdicke im Bereich der optischen Achse von etwa 24 mm. Bei Verwendung eines Kunststoffmaterials mit einer Schwindung von 0,5% würde dies im zweiten Prozesstakt eine Schwindung von jeweils 0,03 mm für die an der Vorderseite und die an der Rückseite des Rohlings angespritzte Materialschichten bedeuten, in der Summe für beide Schichten also 0,06 mm. Bei Verwendung eines Kunststoffmaterials mit 1,2% Schwindung beträgt der Materialschwund beim Abkühlen jeweils 0,072 mm, in der Summe für beide Materialschichten also 0,144 mm.

Betrachtet man im Gegensatz dazu eine nach einem herkömmlichen Spritzgussverfahren in nur einem Prozesstakt in einem Stück hergestellte, im Bereich der optischen Achse der Linse ebenfalls etwa 24 mm dicke Kunststofflinse, wäre dort die mögliche Schwindung und damit die Ungenauigkeit der Linsenoberfläche doppelt so groß, also im Bereich von 0,12 mm bei einem Kunststoffmaterial mit 0,5% Schwindung bzw. 0,288 mm bei einem Kunststoffmaterial mit 1,2% Schwindung.

Die Schwindung hängt von der Art des verwendeten Kunststoffmaterials, das wiederum durch die geforderten optischen Eigenschaften (z.B. Brechungsindex) der Kunststofflinse vorgegeben ist. Es ist also nicht möglich, für die Herstellung der Projektionslinse einfach ein Kunststoffmaterial mit einer geringeren Schwindung zu verwenden, da dieses u.U. nicht die geforderten optischen Eigenschaften aufweist.

Die höhere Qualität der erfindungsgemäßen Kunststofflinse ergibt sich auch dadurch, dass aufgrund der geringen Dicke der im zweiten Prozesstakt anzuspritzenden Materialschichten ein Verformen der Linse beim Abkühlen, insbesondere im Bereich von über den optisch wirksamen Bereich der Linse hinausragender Funktionsteilen, deutlich verringert wird. Dies gilt insbesondere für einen die optisch wirksamen Bereiche der Linse umgebenden, radial nach außen abstehenden Rand oder für radial nach außen abstehende Flügel, Ösen, Schnapphaken, etc.

Ein weiterer Vorteil des geringen Verformens der nach dem erfindungsgemäßen Verfahren spritzgegossenen Kunststofflinse besteht darin, dass in dem weiteren Prozesstakt, in dem die Kunststofflinse die gewünschte Qualität hinsichtlich Abmessungen, Form, Kontur und/oder Oberflächenbeschaffenheit erhält, mit der richtigen, echten Werkzeugform gespritzt werden kann. Das bedeutet, die Werkzeugform entspricht im Bereich der auszuspritzenden weiteren Kavitäten tatsächlich der Form der fertigen Kunststofflinse.

Das ist bei den aus dem Stand der Technik bekannten herkömmlichen Spritzgussverfahren zur Herstellung von Kunststofflinse anders: Dort wird häufig von dem sogenannten Bombieren Gebrauch gemacht. Das heißt die Werkzeugform bzw. die Kavität wird an bestimmten Stellen vergrößert oder verzerrt mit dem Ziel, dass sich die Form der gespritzten Kunststofflinse nach dem Abkühlen so verändert, dass sie der gewünschten Form, den gewünschten Abmessungen sowie der gewünschten Oberflächenbeschaffenheit entspricht. Das Bombieren ist jedoch sehr aufwendig und zudem mit einem erheblichen Unsicherheitsfaktor behaftet, da sich das abkühlende Kunststoffmaterial nicht immer gleich verhält, so dass es unter bestimmten Umständen, z.B. Umgebungsbedingungen, zu abgekühlten Kunststofflinsen kommen kann, die nicht die gewünschte Form aufweisen.

Die erfindungsgemäße Linse aus Kunststoff hat zudem den Vorteil, dass sie in nahezu beliebigen Formen und Konturen hergestellt werden kann. Zudem ist die Kunststofflinse besonders leicht, so dass sich das Gewicht des Lichtmoduls und damit des gesamten Kraftfahrzeugscheinwerfers reduziert. Durch die Möglichkeit, bei dem erfindungsgemäßen Herstellungsverfahren nahezu beliebig Funktionsteile außen an der Linse anzuspritzen, wird die Handhabung der erfindungsgemäßen Linse sowie deren Herstellung und ihr Einbau in das Lichtmodul deutlich vereinfacht.

Selbstverständlich ist es denkbar, dass die erfindungsgemäße Kunststofflinse nicht nur in zwei Prozesstakten, sondern in drei oder mehr Prozesstakten hergestellt wird, wobei im ersten Prozesstakt der Rohling von minderer Qualität gespritzt wird und in den nachfolgenden weiteren Prozesstakten dann der Rohling zumindest bereichsweise mit zusätzlichen Kunststoffschichten umspritzt wird. Bei mehreren nacheinander ausgeführten weiteren Prozesstakten sollte die Kunststofflinse die gewünschte bzw. geforderte Qualität hinsichtlich Form, Kontur, Abmessungen und/oder Oberflächenbeschaffenheit zumindest nach dem letzten Prozesstakt aufweisen. Bei allen vorangegangenen weiteren Prozesstakten kann es, ebenso wie bei dem ersten Prozesstakt, bei dem der Rohling von minderer Qualität gespritzt wird, unter Umständen nicht so sehr auf Genauigkeit und Qualität des gespritzten Werkstücks an, da diese - wie oben bereits ausführlich beschrieben - in dem bzw. den nachfolgenden Prozesstakt(en) noch verbessert werden kann.

Schließlich wird, ausgehend von dem Werkzeug zur Herstellung einer Kunststofflinse eines Lichtmoduls eines Kraftfahrzeugscheinwerfers mittels Spritzgießen vorgeschlagen, dass das Werkzeug
- mindestens eine erste, in einem ersten Prozesstakt zur Herstellung eines Rohlings der Kunststofflinse von minderer Qualität hinsichtlich Form, Abmessungen und/oder Oberflächenbeschaffenheit mit Kunststoff auszuspritzende Kavität,
- mindestens eine weitere, in einem weiteren Prozesstakt mit Kunststoff auszuspritzende Kavität, um den Rohling zumindest bereichsweise mit einer zusätzlichen Schicht aus Kunststoff zu umspritzen, und
- eine Transporteinheit aufweist, um den im ersten Prozesstakt gespritzten mindestens einen Rohling bzw. den in einem weiteren Prozesstakt mit einer zusätzlichen Schicht umspritzten mindestens einen Rohling aus der dem aktuellen Prozesstakt zugeordneten Kavität in eine weitere, dem nachfolgenden Prozesstakt zugeordnete Kavität zu transportieren. Sowie die weiteren Merkmale des unabhängigen Anspruchs 8.

Die mindestens eine erste Kavität dient zum Spritzen des Rohlings der Kunststofflinse. Es ist denkbar, dass das Werkzeug über mehrere erste Kavitäten verfügt, so dass in dem ersten Prozesstakt gleichzeitig mehrere Rohlinge gespritzt werden können. Nach dem Abkühlen der Rohlinge werden diese aus der mindestens einen ersten Kavität entnommen und zu der mindestens einen weiteren Kavität transportiert. Wenn mehrere erste Kavitäten vorhanden sind, verfügt das Werkzeug sinnvollerweise auch über mehrere weitere Kavitäten, so dass in dem weiteren Prozesstakt die im ersten Prozesstakt hergestellten Rohlinge alle gleichzeitig zumindest bereichsweise mit einer Kunststoffschicht umspritzt werden können. Falls noch weitere Prozesstakte vorgesehen sind, in denen das Werkstück (der Rohling oder der mit einer zusätzlichen Schicht aus Kunststoff umspritzte Rohling) mit weiteren zusätzlichen Schichten aus Kunststoff umspritzt werden sollen, sind für diese weiteren Prozesstakte sinnvollerweise ebenfalls die gleiche Anzahl an Kavitäten vorhanden, wie für die vorangegangenen Prozesstakte.

Vorteilhafterweise wird - mit Ausnahme des ersten Arbeitstakts - in allen nachfolgenden Arbeitstakten in dem ersten Prozesstakt und dem mindestens einen weiteren Prozesstakt zeitgleich Kunststoff eingespritzt, so dass sämtliche Prozesstakte synchron ablaufen. Das bedeutet, dass in einem Prozesstakt in der mindestens einen ersten Kavität ein Rohling gespritzt wird und gleichzeitig in mindestens einer weiteren Kavität ein in dem vorangegangenen Prozesstakt bereits gespritzter Rohling mit Kunststoff umspritzt wird. Das heißt, dass sich in einem bestimmten Arbeitstakt das Herstellungsverfahren in ersten Kavitäten in einem ersten Prozesstakt und in weiteren Kavitäten in einem nachfolgenden Prozesstakt befindet.

Am Ende eines Arbeitstakts werden die Werkstücke aus den Kavitäten entnommen. Der gespritzte Rohling wird aus der ersten Kavität entnommen und in die mindestens eine weitere Kavität eingesetzt, dort positioniert und in der gewünschten Position gehalten. In dem nachfolgenden Arbeitstakt wird der Rohling dann mit der zusätzlichen Schicht aus Kunststoff umspritzt. Gleichzeitig wird in der ersten Kavität ein weiterer Rohling gespritzt, der dann in dem nachfolgenden Arbeitstakt in der weitren Kavität zumindest bereichsweise mit Kunststoff umspritzt wird. Die in einem der weiteren Prozesstakte fertiggestellten Linsen werden aus den weiteren Kavitäten entnommen und einer Weiterverarbeitung (z.B. Entgraten, Anbringen von Befestigungselementen, Einfärben, etc.) und/oder der Montage des Lichtmoduls bzw. des Fahrzeugscheinwerfers zugeführt. Auf diese Weise kann bei der Fertigung der Kunststofflinse ein besonders hoher Durchsatz und eine besonders kurze Herstellzeit erzielt werden.

In der mindestens einen weiteren Kavität, in der das Werkstück (der Rohling bzw. ein mit einer zusätzlichen Schicht aus Kunststoff umspritzter Rohling) die gewünschte Qualität hinsichtlich Form, Abmessungen, Kontur und/oder Oberflächenbeschaffenheit erhält, ist die Oberfläche vorzugsweise vernickelt oder in anderer Weise beschichtet. Zusätzlich oder alternativ kann die Oberfläche dieser Kavität mit einer Mikrostruktur versehen werden. Auf der Oberfläche der fertigen Kunststofflinse ist die Mikrostruktur bzw. deren Abdruck mit bloßem Auge nicht zu erkennen. Die Linsenoberflächen sieht völlig glatt und eben aus. Dennoch kann durch eine in der Oberfläche der Kavität des Spritzwerkzeugs ausgebildete Mikrostruktur die durch die Kunststofflinse auf die Fahrbahn vor das Kraftfahrzeug projizierte Lichtverteilung zum Teil erheblich beeinflusst werden. Durch die Mikrostruktur können bspw. gezielt hellere und dunklere Bereiche (am Fahrbahnrand auf der eigenen Verkehrsseite oder der Gegenverkehrsseite, oberhalb einer Helldunkelgrenze, etc.) der Lichtverteilung erzeugt werden. Des Weiteren kann durch eine geeignete Mikrostruktur in der Oberfläche der Kavität der Hell-Dunkel-Übergang im Bereich einer Helldunkelgrenze verwischt werden, also unscharf gemacht werden. Es wäre sogar denkbar, durch eine in geeigneter Weise ausgestaltete Mikrostruktur Texte und Zeichen (z.B. Namen und/oder Zeichen von Fahrzeugherstellern) in der Lichtverteilung für den Fahrer sichtbar zu machen. Die Mikrostruktur wird vorzugsweise mittels eines oder mehrerer Diamanten in die Oberfläche der Kavität des Spritzwerkzeugs eingebracht.

Gemäß einer vorteilhaften Weiterbildung der vorliegenden Erfindung wird vorgeschlagen, dass die mindestens eine erste Kavität und die mindestens eine weitere Kavität um einen gemeinsamen Mittelpunkt herum, um einen vorgegebenen Drehwinkel zueinander versetzt in dem Werkzeug ausgebildet sind, wobei die Transporteinheit als eine um eine durch den Mittelpunkt verlaufende Achse drehbare und entlang der Achse bewegbare Drehhubeinheit ausgebildet ist. Durch diese besondere Ausgestaltung der Transporteinheit können die in den verschiedenen Kavitäten im Rahmen eines Arbeitstaktes hergestellten Werkstücke besonders einfach aus den Kavitäten entnommen und in die nächste Kavität des nachfolgenden Prozesstaktes transportiert werden. Dort kann dann die Fertigung der Kunststofflinse fortgesetzt werden, indem bspw. der in einer ersten Kavität gespritzte Rohling mit einer weiteren Schicht aus Kunststoff umspritzt wird. Dabei werden vorzugsweise Oberflächenfehler des Rohlings (z.B. Einfallstellen, Kratzer, Macken oder ähnliches) beseitigt, indem sie mit dem Kunststoff der zusätzlich gespritzten Schicht vollständig und für den Betrachter bzw. das menschliche Auge nach dem Aushärten der Kunststofflinse unsichtbar ausgefüllt werden.

Gemäß einer bevorzugten Ausführungsform der Erfindung wird vorgeschlagen, dass die Kavitäten durch in das Werkzeug einsetzbare, entsprechend geformte Einsatzelemente gebildet sind. Durch diese Ausführungsform des Werkzeugs ist es möglich, ausgehend von einer vorgegebenen Stammform des Werkzeugs verschieden geformte Einsätze einzusetzen, die unterschiedlich geformte Kavitäten erzeugen, um so unterschiedlich geformte Werkstücke (Rohlinge oder zusätzliche Schichten aus Kunststoff) spritzen zu können. Die Einsätze erlauben eine rasche Umrüstung des Werkzeugs, um andere Kunststofflinsen (z.B. mit anderen Abmessungen, anderen Oberflächenstrukturen etc.) herzustellen.

Vorzugsweise sind in dem Werkzeug Aufnahmeelemente, insbesondere Vertiefungen, zur Aufnahme der Einsatzelement ausgebildet. Die Einsatzelemente sind außen in Form, Abmessungen und/oder Ausgestaltung den Aufnahmeelementen entsprechend ausgestaltet, so dass verschiedene Einsatzelemente in ein Aufnahmeelement eingesetzt werden können. Je nach Form, Abmessungen und/oder Oberflächenbeschaffenheit der zu fertigenden Kunststofflinse können aus einer Auswahl mehrerer verschiedener Einsatzelemente zur Bildung unterschiedlicher Kavitäten geeignete Einsatzelemente ausgewählt und in die Aufnahmeelemente eingesetzt werden.

So wäre es beispielsweise denkbar, in dem Werkzeug einen ersten Einsatz zu verwenden, der eine erste Kavität zur Fertigung eines Rohlings einer Projektionslinse erzeugt. Die weitere Kavität wird für die Fertigung einer Projektionslinse für ein in Europa eingesetztes Projektionsmodul mit einer ersten Ausführungsform eines weiteren Einsatzes erzeugt. Wenn mit dem gleichen Werkzeug eine Projektionslinse für ein in den USA eingesetztes Projektionsmodul erzeugt werden soll, kann der Einsatz der ersten Kavität zur Erzeugung des Rohlings unverändert beibehalten werden. Es muss lediglich der weitere Einsatz der zweiten Kavität gegen einen anderen Einsatz ausgetauscht werden, mit dem Projektionslinsen nach SAE gefertigt werden können. Linsen für den Einsatz in Europa und den Einsatz in den USA haben also den gleichen Rohling und unterscheiden sich lediglich in der Ausgestaltung der im Rahmen des mindestens einen weiteren Prozesstaktes auf den Rohling gespritzten zusätzlichen Schicht(en) aus Kunststoff.

Vorteilhafterweise weist das Werkzeug eine erste Spritzeinheit auf, welche in dem ersten Prozesstakt Kunststoff in die mindestens eine erste Kavität spritzt. Falls das Werkzeug über mehrere erste Kavitäten zum gleichzeitigen Spritzen von mehreren Rohlingen aufweist, kann die erste Spritzeinheit Kunststoff gleichzeitig in alle ersten Kavitäten spritzen. Falls die Anzahl der ersten Kavitäten sehr groß ist oder falls die ersten Kavitäten räumlich relativ weit auseinanderliegen, kann es unter Umständen sinnvoll sein, mehr als nur eine erste Spritzeinheit vorzusehen.

Des weiteren wird vorgeschlagen, dass das Werkzeug Haltemittel zum Halten und Positionieren des mindestens einen Rohlings in der mindestens einen weiteren Kavität aufweist. Die Haltemittel können beliebig ausgestaltet sein. Es wird jedoch vorgeschlagen, dass die mindestens eine weitere Kavität des Werkzeugs derart ausgebildet ist, dass sie bei in der mindestens einen weiteren Kavität positioniertem und gehaltenem Rohling durch einen äußeren, über einen optisch wirksamen Bereich der fertigen Kunststofflinse hinausragenden umlaufenden Rand des Rohlings in eine erste, an der Vorderseite des Rohlings angeordnete Teilkavität und eine weitere, an der Rückseite des Rohlings angeordnete Teilkavität unterteilt ist. Durch die Unterteilung der weiteren Kavitäten in jeweils zwei Teilkavitäten durch den um die eigentliche Kunststofflinse umlaufenden, sich im Wesentlichen radial nach außen erstreckenden Rand des Rohlings ist es möglich, den Spritzgussvorgang für die an der Vorderseite des Rohlings anzuspritzende zusätzliche Schicht aus Kunststoff einerseits und den Spritzgussvorgang für die an der Rückseite des Rohlings anzuspritzende zusätzliche Schicht aus Kunststoff andererseits zwar zeitgleich auszuführen, aber jeden Spritzgussvorgang für sich individuell zu steuern bzw. zu regeln. Auf diese Weise kann die Herstellung der Vorderseite bzw. Rückseite der Kunststofflinse individuell optimiert werden, wodurch sich eine weitere Verbesserung der Qualität hinsichtlich Form, Kontur, Abmessungen und/oder Oberflächenbeschaffenheit der fertigen Kunststofflinse erzielen lässt.

Demgemäß weist das Werkzeug eine zweite Spritzeinheit, welche in dem mindestens einen weiteren Prozesstakt Kunststoff in die an der Vorderseite des Rohlings angeordnete erste Teilkavität der mindestens einen weiteren Kavität spritzt, und eine dritte Spritzeinheit auf, welche in dem mindestens einen weiteren Prozesstakt Kunststoff in die an der Rückseite des Rohlings angeordnete zweite Teilkavität der mindestens einen weiteren Kavität spritzt. Die zweite und die dritte Spritzeinheit spritzen vorzugsweise zeitgleich, zumindest aber im gleichen Arbeitstakt, Kunststoff in die vordere bzw. rückwärtige Teilkavität.

Gemäß einer anderen vorteilhaften Weiterbildung der vorliegenden Erfindung wird vorgeschlagen, dass das Werkzeug Mittel zur Variation der Temperatur der mindestens einen ersten Kavität und der mindestens einen weiteren Kavität aufweist. Die Mittel zur Variation der Temperatur umfassen bspw. flüssigkeitsführende Kanäle, die in Wänden des Werkzeugs ausgebildet sind, welche die mindestens eine erste Kavität und die mindestens eine weitere Kavität umgeben. Gemäß dieser Weiterbildung verfügt das erfindungsgemäße Werkzeug also über eine variotherme Temperierung, um den Herstellungsprozess der Linsen zu optimieren und zu beschleunigen.

Während des Spritzens von Kunststoff in die Kavitäten sollten diese eine möglichst hohe Temperatur aufweisen, um die Fließfähigkeit des eingespritzten erwärmten Kunststoffes in der Kavität zu erhalten. Zum Abkühlen des eingespritzten Kunststoffes sollte die Temperatur der Kavitäten dann für den Abkühlvorgang reduziert werden. Falls die variotherme Temperierung des Werkzeugs bzw. der Kavitäten durch flüssigkeitsführende Kanäle realisiert ist, kann durch diese während des Spritzvorgangs bspw. etwa 140° Celsius warme Flüssigkeit hindurchgeleitet werden. Während der Abkühlphase kann durch die Kanäle eine bspw. 40° Celsius kalte Flüssigkeit hindurchgeleitet werden. Über die Temperatur der in den Kanälen geführten Flüssigkeit kann auch ein gewünschter Temperaturverlauf während des Abkühlens des Werkstücks abgefahren werden, um ein zu rasches oder abruptes Abkühlen des Werkstücks zu vermeiden. Als geeignete Flüssigkeit zur Variation der Temperatur der Kavitäten kann bspw. Wasser eingesetzt werden. Während des Spritzvorgangs kann das Wasser auf einem Druck oberhalb des Umgebungsdrucks flüssig gehalten werden oder alternativ als Wasserdampf durch die Leitungen geführt werden.

Weitere Merkmale und Vorteile der vorliegenden Erfindung werden nachfolgend anhand der Figuren näher erläutert. Es zeigen:
- Figur 1: ein Projektionsmodul eines erfindungsgemäßen Kraftfahrzeugscheinwerfers gemäß einer bevorzugten Ausführungsform;
- Figur 2: eine erfindungsgemäße Projektionslinse gemäß einer bevorzugten Ausführungsform in einer Draufsicht;
- Figur 3: die erfindungsgemäße Projektionslinse aus Figur 2 im Schnitt A-A;
- Figur 4: einen Schnitt durch Teile eines erfindungsgemäßen Werkzeugs gemäß einer bevorzugten Ausführungsform zur Herstellung der Projektionslinse;
- Figur 5: das erfindungsgemäße Werkzeug in einer perspektivischen Ansicht;
- Figur 6: einen Teil des erfindungsgemäßen Werkzeugs ohne Druckplatte in perspektivischer Ansicht;
- Figur 7: den Teil des erfindungsgemäßen Werkzeugs aus Figur 6 in perspektivischer Ansicht mit einem herausgefahrenen Teil einer Drehhubeinheit;
- Figur 8: den Teil des erfindungsgemäßen Werkzeugs aus Figur 6 in perspektivischer Ansicht mit einem herausgefahrenen und gedrehten Teil der Drehhubeinheit;
- Figur 9: die von dem in den Figuren 6 bis 8 gezeigten Werkzeugteil abgenommene Düseneinheit in perspektivischer Ansicht; und
- Figur 10: ein erfindungsgemäßes Verfahren zum Herstellen einer Projektionslinse aus Kunststoff gemäß einer bevorzugten Ausführungsform.

Die vorliegende Erfindung wird nachfolgend am Beispiel einer Projektionslinse für ein Projektionsmodul eines Kraftfahrzeugscheinwerfers näher beschrieben. Die Erfindung ist jedoch nicht auf dieses Ausführungsbeispiel beschränkt. Selbstverständlich können nicht nur Projektionslinsen, sondern beliebige transparente, optisch wirksame Elemente eines beliebigen Lichtmoduls (z.B. Projektionsmodul oder Reflexionsmodul) einer beliebigen Beleuchtungseinrichtung (z.B. Scheinwerfer oder Leuchte) für Kraftfahrzeuge nach dem erfindungsgemäßen Verfahren hergestellt werden, wie bspw. direktabbildende Systeme oder Vorsatzoptiken für Lichtmodule mit LED-Lichtquellen.

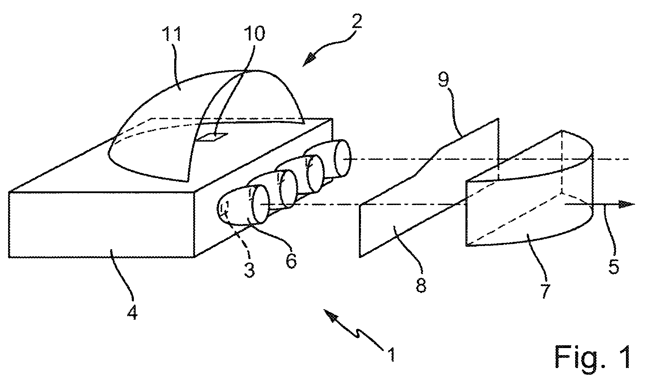

Figur 1 zeigt ein Lichtmodul für den Einsatz in einem Kraftfahrzeugscheinwerfer. Das Lichtmodul ist in dem dargestellten Ausführungsbeispiel als ein LED-Projektionsmodul 1 ausgebildet. Das Lichtmodul 1 kann entweder alleine oder zusammen mit weiteren Lichtmodulen in einem Gehäuse des Kraftfahrzeugscheinwerfers angeordnet sein. Das Lichtmodul 1 kann entweder alleine oder zusammen mit weiteren Lichtmodulen eine vorgegebene Lichtverteilung erzeugen. In dem dargestellten Ausführungsbeispiel ist das Projektionsmodul 1 bspw. durch ein zusätzliches Reflektionsmodul 2 ergänzt.

Das Projektionsmodul 1 umfasst mindestens eine Lichtquelle 3, die in dem dargestellten Ausführungsbeispiel als Halbleiterlichtquellen, insbesondere als Leuchtdioden (LEDs) ausgebildet sind. Das Projektionsmodul 1 umfasst insgesamt vier nebeneinander angeordnete und zueinander beabstandete Leuchtdioden 3 auf, die zur besseren Wärmeableitung auf einem Kühlkörper 4 befestigt sind. Der Kühlkörper 4 ist in Figur 1 nur schematisch dargestellt; er kann Kühlrippen, Kühlstifte oder ähnliche oberflächenvergrößernde Elemente aufweisen. In einer Lichtaustrittsrichtung 5 betrachtet nach den Leuchtdioden 3 ist mindestens eine Primäroptik 6 zum Bündeln des von den Lichtquellen 3 ausgesandten Lichts angeordnet. In dem dargestellten Ausführungsbeispiel sind insgesamt vier Primäroptiken 6 vorgesehen, die jeweils als eine Vorsatzoptik aus transparentem Material, bspw. Glas oder Kunststoff, ausgebildet sind. Jede Vorsatzoptik 6 weist eine der zugeordneten Lichtquelle 3 zugewandte Lichteintrittsfläche sowie eine in Lichtaustrittsrichtung 5 gerichtete Lichtauskoppelfläche auf. Von einer Lichtquelle 3 ausgesandtes Licht wird über die Einkoppelfläche in die Vorsatzoptik 6 eingekoppelt und dort durch Totalreflexion an den äußeren Grenzflächen und/oder Brechung an den Lichteinkoppel- bzw. Lichtauskoppelflächen gebündelt. Selbstverständlich wäre es denkbar, statt der vier separaten Vorsatzoptiken 6 lediglich eine, für alle vier Lichtquellen 3 gemeinsame Vorsatzoptik vorzusehen. Außerdem wäre es denkbar, die mindestens eine Primäroptik 6 anderweitig auszugestalten, bspw. als mindestens ein Reflektor.

In Lichtaustrittsrichtung 5 betrachtet nach den Primäroptiken 6 ist mindestens eine Sekundäroptik 7 angeordnet, die in dem dargestellten Ausführungsbeispiel als eine Projektionslinse ausgebildet ist. Die Projektionslinse 7 bildet das durch die Primäroptiken 6 gebündelte Licht zur Erzeugung einer gewünschten Lichtverteilung auf einer Fahrbahn vor dem Kraftfahrzeug, an dem das Lichtmodul 1 montiert ist, ab. Selbstverständlich wäre es denkbar, statt der einen gemeinsamen Sekundäroptik 7 auch mehrere separate Primäroptiken vorzusehen, die jeweils nur einen Teil des gebündelten Lichts auf der Fahrbahn abbilden, wobei sich die gewünschte Lichtverteilung auf der Fahrbahn dann durch die Überlagerung der von den einzelnen Sekundäroptiken abgebildeten Teil-Lichtverteilungen ergibt. Die Projektionslinse 7 besteht aus einem transparenten Material, bspw. Kunststoff.

Falls die auf der Fahrbahn abgebildete Lichtverteilung eine abgeblendete Lichtverteilung mit einer im Wesentlichen horizontalen Helldunkelgrenze sein soll, ist zwischen den Primäroptiken 6 und der Sekundäroptik 7 eine Blendenanordnung 8 angeordnet, deren Oberkante in den Strahlengang des von den Primäroptiken 6 gebündelten Lichts ragt. Die Blendenanordnung 8 schattet zumindest einen Teil des gebündelten Lichts ab, wobei die Sekundäroptik 7 dann nur den an der Blendenanordnung 8 vorbeigelangten Teil des gebündelten Lichts zur Erzeugung der gewünschten Lichtverteilung auf der Fahrbahn abbildet. Die Oberkante 9 der Blendenanordnung 8 wird von der Sekundäroptik 7 als im Wesentlichen horizontale Helldunkelgrenze der Lichtverteilung auf der Fahrbahn abgebildet. Die Oberkante 9 der Blendenanordnung 8 und damit die resultierende Helldunkelgrenze der Lichtverteilung kann einen ebenen Verlauf aufweisen. Es ist auch denkbar, dass die Helldunkelgrenze einen asymmetrischen Verlauf aufweist mit einem ersten Abschnitt auf der eigenen Verkehrsseite, der höher ist als ein zweiter, auf der Gegenverkehrsseite liegender Abschnitt. Der Übergang zwischen den beiden Abschnitten auf der eigenen Verkehrsseite und der Gegenverkehrsseite kann beliebig ausgebildet sein, bspw. stufenförmig oder schräg, insbesondere mit einem 15°-Anstieg. Die von dem dargestellten Lichtmodul 1 erzeugte Lichtverteilung ist bspw. eine Abblendlichtverteilung für ECE, eine Abblendlichtverteilung für SAE, eine Nebellichtverteilung, eine adaptive Lichtverteilung mit gegenüber herkömmlichem Abblendlicht angehobener oder veränderter Helldunkelgrenze (z.B. Stadtlicht, Landstraßenlicht, Autobahnlicht, etc.) und viele andere. Ohne die Blendenanordnung 8 könnte das Lichtmodul 1 bspw. Tagfahrlicht, Fernlicht, Blinklicht, Begrenzungs- oder Positionslicht, und viele andere Lichtverteilungen erzeugen. Es ist denkbar, dass die Blendenanordnung 8 bewegbar ausgebildet ist und in den Strahlengang hinein und aus diesem wieder herausbewegt werden kann. Dadurch wäre es möglich, mit dem Projektionsmodul 1 sowohl abgeblendete Lichtverteilungen als auch Lichtverteilungen ohne Helldunkelgrenze zu erzeugen. Darüber hinaus könnte das gesamte Projektionsmodul 1 oder Teile (z.B. Primäroptiken 6, Sekundäroptik 7) beweglich ausgebildet sein, um bspw. dynamisches Kurvenlicht (Bewegung in horizontaler Richtung um eine vertikale Drehachse) und/oder eine Leuchtweitenregulierung (Bewegung in vertikaler Richtung um eine horizontale Drehachse) zu erzeugen.

Für den Fachmann ist es klar, dass die Einsatzmöglichkeiten eines Projektionsmoduls, wie bspw. des LED-Projektionsmoduls 1 aus Figur 1, vielfältig sind.
Gegenstand der vorliegenden Erfindung ist die Projektionslinse 7 und deren Herstellung. Die Verwendung einer solchen erfindungsgemäßen Projektionslinse 7 ist in beliebigen Projektionsmodulen 1 denkbar. Insbesondere könnte die Projektionslinse 7 auch in Projektionsmodulen 1 eingesetzt werden, die statt der Leuchtdioden 3 andere Lichtquellen, bspw. Glühlampen oder Gasentladungslampen, aufweisen. Selbst ein Einsatz der erfindungsgemäßen Projektionslinse 7 in Scheinwerfern jenseits der Kraftfahrzeugtechnik bspw. zur Ausleuchtung im Theater, in der Oper oder im Film, eingesetzt werden.

In dem in Figur 1 gezeigten Ausführungsbeispiel ist das Projektionsmodul 1 durch ein Reflexionsmodul 2 ergänzt. Dieses umfasst mehrere auf der Oberseite des Kühlkörpers 4 angeordnete Halbleiterlichtquellen 10, die Licht in der nach oben, also im Wesentlichen senkrecht zur Lichtaustrittsrichtung 5 gerichteten Hauptabstrahlrichtung aussenden. Das Reflexionsmodul 2 umfasst außerdem einen Reflektor 11, der ebenfalls auf der Oberseite des Kühlkörpers 4 angeordnet ist und das von den Lichtquellen 10 ausgesandte Licht in Lichtaustrittsrichtung 5 reflektiert. Der Reflektor 11 ist in dem dargestellten Ausführungsbeispiel als ein sogenannter Halbschalenreflektor ausgebildet, der einen 180°-Halbraum auf der Oberseite des Kühlkörpers 4 überdeckt. Das von dem Reflektor 11 reflektierte Licht gelangt an der Projektionslinse 7 vorbei, um schließlich auf der Fahrbahn vor dem Kraftfahrzeug eine gewünschte Lichtverteilung zu erzeugen bzw. zusammen mit der von dem Projektionsmodul 1 erzeugten Lichtverteilung eine gewünschte Gesamt-Lichtverteilung zu erzeugen. So wäre es bspw. denkbar, dass eines der Lichtmodule 1, 2 eine Grundlichtverteilung eines Abblendlichts, mit einer besonders breiten Lichtstreuung in horizontaler Richtung und das andere Lichtmodul 2, 1 einen Spot nahe einer vertikalen Mittelachse der Lichtverteilung, d.h. mit deutlich geringerer horizontaler Streuung, erzeugt. Grundlichtverteilung und Spot erzeugen zusammen die gewünschte Abblendlichtverteilung.

Nach dem Stand der Technik werden die Projektionslinsen 7 in einem Stück, insbesondere in einem Prozesstakt, durch Spritzgießen hergestellt. Aufgrund der relativ großen Dicke im Zentrum der Projektionslinsen 7 müssen diese in einem äußerst aufwendigen Verfahren und sehr langsam gespritzt, abgekühlt und entformt werden, da es ansonsten zu Lufteinschlüssen in dem Kunststoffmaterial, Materialschwindung, einem Verformen des Werkstücks und/oder sogenannten Vakuolen kommen kann. Bei einer im Zentrum etwa 30 mm dicken Projektionslinse 7 beträgt die Zykluszeit für deren Herstellung nach dem bekannten Verfahren etwa 18 Minuten. Zudem ist die Qualität der nach dem bekannten Verfahren hergestellten Projektionslinsen 7 bezüglich Form, Kontur und Oberflächenstruktur nicht optimal, da trotz größter Sorgfalt beim Spritzgießen aufgrund der großen Dicke der Projektionslinsen 7 Fehler in einer akzeptablen Zykluszeit nicht vollständig verhindert werden können. Ein weiterer Nachteil des bekannten Herstellungsverfahrens besteht darin, dass die mögliche Form der Projektionslinse 7 äußerst begrenzt ist. Aus diesem Grund haben die nach dem herkömmlichen Spritzgießverfahren hergestellten Projektionslinsen 7 üblicherweise die in Figur 1 dargestellte Form. Eine flexiblere Gestaltung der Projektionslinse 7 hinsichtlich Form und Kontur sowie das Anspritzen von Funktionsteilen (Ösen, Schnapphaken, Domen, Auflageflächen, etc.) ist mit dem bekannten Spritzgießverfahren nicht möglich.

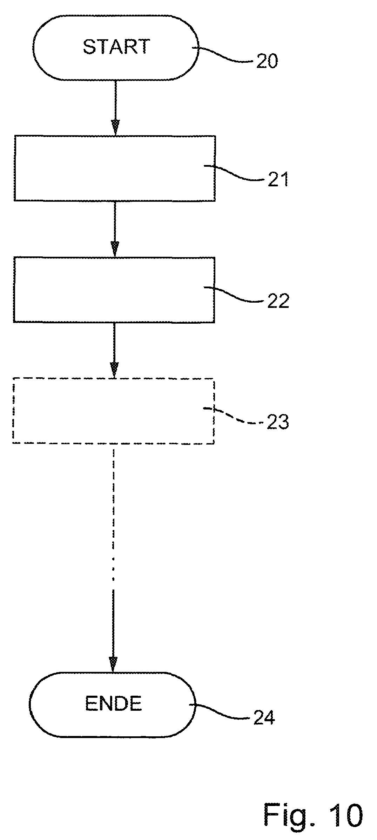

Hier kann das erfindungsgemäße Verfahren Abhilfe schaffen. Das Prinzip des erfindungsgemäßen Verfahrens wird nachfolgend anhand des Ablaufdiagramms aus Figur 10 näher erläutert. Das beschriebene Verfahren dient zur Herstellung einer Projektionslinse 7. Selbstverständlich können nach dem erfindungsgemäßen Verfahren mehrere Projektionslinsen 7 zeitgleich und/oder taktversetzt zueinander hergestellt werden. Das Verfahren beginnt in einem Funktionsblock 20. Dann wird in einem ersten Prozesstakt (Funktionsblock 21) ein Rohling der Projektionslinse 7 aus Kunststoff gespritzt. Der Rohling entspricht in seinen Abmessungen, seiner Form und seiner Kontur noch nicht der endgültigen Projektionslinse 7. Insbesondere hat der Rohling im Zentrum eine geringere Dicke als die fertige Projektionslinse. Wenn bspw. die fertige Projektionslinse eine Dicke im Zentrum von etwa 24 mm aufweisen soll, könnte der Rohling bspw. eine Dicke im Zentrum von lediglich 12 mm aufweisen. Auch hinsichtlich der Oberflächenbeschaffenheit entspricht der Rohling noch nicht den Anforderungen an die fertige Projektionslinse 7. So ist es bspw. denkbar, dass der Rohling auf seiner Oberfläche Einfallsstellen, Kratzer oder ähnliche Fehler aufweist. Durch die gegenüber der fertigen Projektionslinse 7 geringeren Abmessungen des Rohlings und die geringeren Anforderungen an die Qualität der Oberflächen kann der Rohling wesentlich schneller aus Kunststoff gespritzt werden als die Projektionslinse 7 nach dem bisherigen Verfahren. Die Zykluszeit konnte von den 18 Minuten des bisherigen Verfahrens auf derzeit 6 Minuten für das Spritzen des Rohlings reduziert werden, wobei eine weitere Reduktion der Zykluszeit durch weitere Optimierung des erfindungsgemäßen Verfahrens möglich ist.

In einem zweiten Prozesstakt (Funktionsblock 22) wird der in dem ersten Prozesstakt gefertigte Rohling zumindest bereichsweise mit einer zusätzlichen Schicht aus Kunststoff umspritzt. Das Umspritzen mit einer zusätzlichen Kunststoffschicht dient einerseits dazu, die gewünschten Abmessungen, sowie die gewünschte Form und Kontur der Projektionslinse zu erreichen. So ist es bspw. denkbar, sowohl an der Vorderseite als auch an der Rückseite des Rohlings eine zusätzliche Schicht, die im Zentrum des Rohlings etwa 6 mm dick ist, aufzuspritzen, so dass der im Zentrum etwa 12 mm dicke Rohling zusammen mit den beiden jeweils etwa 6 mm dicken zusätzlichen Schichten aus Kunststoff an der Vorder- und Rückseite des Rohlings zu einer fertigen Projektionslinse 7 mit einer Dicke im Zentrum von etwa 24 mm führt. Auch die übrigen Abmessungen, die Form und die Kontur der fertigen Projektionslinse können durch das Aufspritzen zusätzlicher Kunststoffschichten auf den Rohling in dem zweiten Prozesstakt 22 erreicht werden. Des Weiteren dient das Umspritzen des Rohlings mit einer zusätzlichen Kunststoffschicht dazu, die gewünschte Oberflächenqualität der fertigen Projektionslinse 7 zu erreichen. Die auf den Rohling aufgespritzte zusätzliche Kunststoffschicht gleicht Einfallstellen in der Oberfläche des Rohlings aus, dringt selbst in feinste Kratzer, Kerben und Macken in der Oberfläche des Rohlings ein und füllt diese vollständig aus. An der fertigen Projektionslinse 7 kann man nicht erkennen, dass diese in einem mehrtaktigen Verfahren aus einem Rohling und zusätzlichen, auf den Rohling aufgespritzten Kunststoffschichten besteht. Auch von den Einfallstellen, Kratzern oder anderen Oberflächenfehler des Rohlings ist an der fertigen Projektionslinse 7 nichts mehr zu erkennen. Aufgrund der relativ geringen Dicke der im zweiten Prozesstakt 22 zusätzlich aufgespritzten Kunststoffschichten, können diese mit der geforderten Genauigkeit und Qualität in relativ kurzer Zeit gefertigt werden. Insbesondere dauert der zweite Prozesstakt 22 nicht länger als der erste Prozesstakt 21, so dass in einem Takt ein Rohling gespritzt werden und gleichzeitig an anderer Stelle ein im vorangegangenen Takt gefertigter Rohling mit der zusätzlichen Kunststoffschicht umspritzt werden. Auf diese Weise kann also die komplette Projektionslinse 7 nach dem erfindungsgemäßen Verfahren in einer sehr kurzen Zykluszeit, beispielsweise 6 Minuten statt der bisherigen 18 Minuten, hergestellt werden.

Es ist denkbar, dass in dem zweiten Prozesstakt 22 der Rohling durch das Umspritzen mit der zusätzlichen Kunststoffschicht noch nicht die endgültigen gewünschten Abmessungen der Projektionslinse 7 und/oder noch nicht deren Form, Kontur oder Oberflächenqualität erreicht hat. In diesem Fall wäre es denkbar, nach dem zweiten Prozesstakt noch einen dritten Prozesstakt (Funktionsblock 23) auszuführen, in dem das Werkstück (der Rohling bzw. der mit einer ersten zusätzlichen Kunststoffschicht umspritzte Rohling) zumindest bereichsweise mit einer weiteren zusätzlichen Schicht aus Kunststoff umspritzt wird. Der Funktionsblock 23 ist gestrichelt dargestellt um anzudeuten, dass er für das erfindungsgemäße Verfahren nicht unbedingt erforderlich ist, aber im Rahmen des Verfahrens ausgeführt werden kann, falls gewünscht. Auch nach dem dritten Prozesstakt 23 können noch weitere Prozesstakte folgen, in denen das Werkstück (der Rohling bzw. der mit einer oder mehreren zusätzlichen Kunststoffschichten umspritzte Rohling) zumindest bereichsweise mit einer weiteren zusätzlichen Kunststoffschicht umspritzt wird. Diese weiteren Prozesstakte sind durch die Punkte im Ablaufdiagramm im Anschluss an den Funktionsblock 23 angedeutet.

Nach dem letzten Prozesstakt, d.h. nach dem zweiten Prozesstakt 22 oder - falls er ausgeführt wird - nach dem dritten Prozesstakt 23 oder - falls sie ausgeführt werden - nach einem beliebigen anderen weiteren Prozesstakt, weist die fertige Projektionslinse 7 die gewünschten Abmessungen, insbesondere die gewünschte Dicke sowie die gewünschte Form und Kontur und außerdem die gewünschte Qualität hinsichtlich der Oberflächenbeschaffenheit auf. Die Projektionslinse 7 ist nach dem erfindungsgemäßen Verfahren in mehreren aufeinanderfolgenden Prozesstakten deutlich schneller hergestellt worden als dies nach dem bekannten Verfahren möglich gewesen wäre. Das Verfahren wird in einem Funktionsblock 24 beendet.

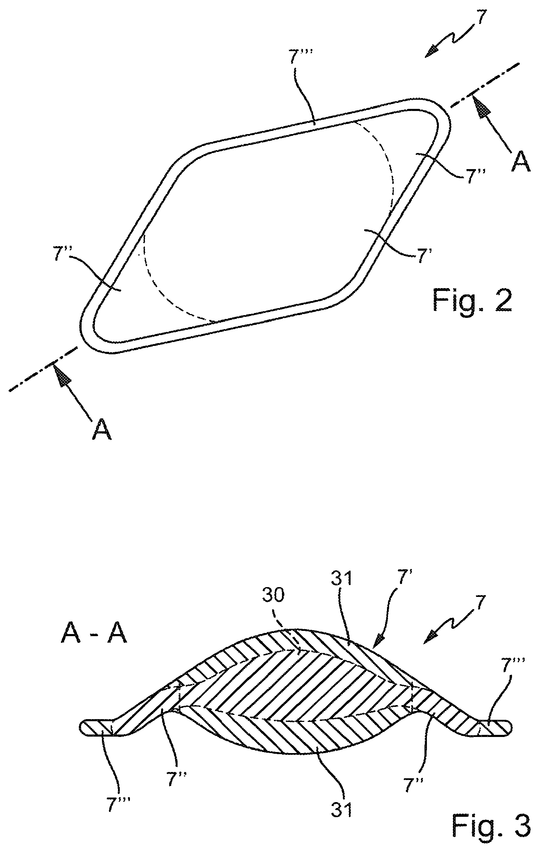

Ein Beispiel für eine nach dem erfindungsgemäßen Verfahren hergestellte Projektionslinse ist in den Figuren 2 und 3 dargestellt. In der Draufsicht aus Figur 2 erkennt man deutlich, dass die Projektionslinse 7 eine von einer Rechteckform abweichende Rauten- oder Rhomboid-Form aufweist. Aufgrund der besonderen Form der Projektionslinse 7 wird beim Einsatz der Projektionslinse 7 in einem Projektionsmodul, wie bspw. dem Projektionsmodul 1 aus Figur 1, nicht die gesamte in der Draufsicht sichtbare Oberfläche von dem gebündelten Licht durchstrahlt. Vielmehr wird lediglich ein annähernd ellipsoidförmiger zentraler Bereich 7' von Licht durchstrahlt. Dieser optisch wirksame Bereich der Projektionslinse 7 wird nachfolgend als die eigentliche Projektionslinse bezeichnet und ist in den Figuren 2 und 3 mit dem Bezugszeichen 7' bezeichnet. Jenseits der eigentlichen Projektionslinse 7' sind im Schnitt A-A Teilabschnitte der Projektionslinse vorhanden, durch die beim Einsatz der Projektionslinse 7 in einem Projektionsmodul kein bzw. kaum Licht hindurchtritt. Diese seitlichen Teilabschnitte der Projektionslinse 7 sind in den Figuren 2 und 3 mit dem Bezugszeichen 7" bezeichnet. Allerdings ist es denkbar, dass durch die eigentliche Projektionslinse 7' hindurchtretendes Licht in die seitlichen Teilbereiche der 7" der Projektionslinse 7 gelenkt wird und aus diesen seitlichen Teilbereichen 7" austritt, so dass die Teilbereiche 7" in einer Ansicht von vorne (entgegen der Lichtaustrittsrichtung 5) die Teilbereiche 7' der Projektionslinse 7 auch noch schwach leuchten können. Die Projektionslinse weist außerdem einen äußeren, in der Draufsicht aus Figur 2 außen um die eigentliche Projektionslinse 7 und die seitlichen Teilbereiche 7" umlaufenden und über diese hinausragenden Rand auf, der in den Figuren 2 und 3 mit dem Bezugszeichen 7"' bezeichnet ist.

In Figur 3 ist der im ersten Prozesstakt gespritzte Rohling mit dem Bezugszeichen 30 bezeichnet. Der Rohling 30 umfasst einen zentralen Bereich der Projektionslinse 7, der bei der fertigen Projektionslinse 7 die eigentliche optische Linse 7' bildet, sowie Teile der seitlich überstehenden Teilabschnitte 7' und den in der Draufsicht aus Figur 2 um die gesamte Linse 7 herumlaufenden Montagerand 7"'. Der Rohling 30 wird also in dem ersten Prozesstakt 21 mit dem äußeren, über die eigentliche Projektionslinse 7' hinausragenden umlaufenden Rand 7'" gespritzt. Dieser Rand 7"' wird im nachfolgenden Prozesstakt 22 (eventuell auch 23 und weitere Prozesstakte) zur Halterung und Positionierung des Rohlings 30 in einer auszuspritzenden Kavität eines Formwerkzeugs genutzt. Der Rand 7"' des Rohlings 30 bleibt vorzugsweise während des gesamten Herstellungsprozesses zumindest in weiten Teilen bestehen. Im Randbereich können z.B. in einem letzten Schritt noch Funktionselemente, wie bspw. Positionierhilfen, Haltemittel oder Befestigungsmittel (z.B. Stifte, Vorsprünge, Ösen, Rasthaken) angebracht werden, die nur kleine Abschnitte des Randes 7"' einnehmen bzw. sogar vollständig auf den seitlich überstehenden Teilabschnitten 7' des Rohlings 30 angeordnet sind.

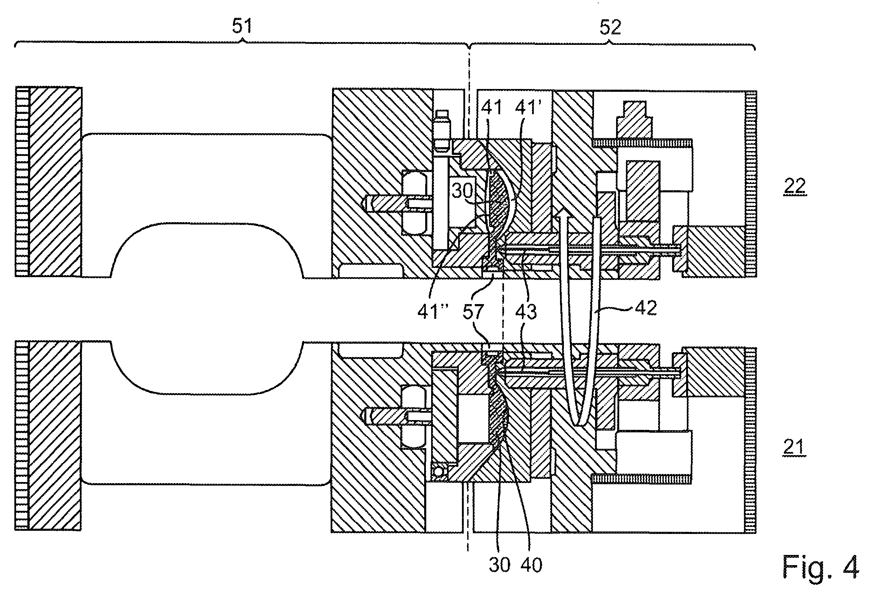

Dieser Zustand, wo der Rohling 30 mittels des umlaufenden Rands 7'" in einer auszuspritzenden Kavität 41 eines Formwerkzeuges gehalten und positioniert ist, ist bspw. in Figur 4 oben dargestellt. Durch den über den umlaufenden Rand 7"' in der Kavität 41 gehaltenen Rohling 30 wird die Kavität 41 in eine erste an der Vorderseite des Rohlings angeordnete Teilkavität 41' und eine weitere an der Rückseite des Rohlings 30 angeordnete Teilkavität 41" unterteilt. In dem zweiten Prozesstakt kann nun durch Ausspritzen mit Kunststoff der ersten Teilkavität 41' die Vorderseite des Rohlings 30 mit einer zusätzlichen Kunststoffschicht 31 umspritzt werden. Ebenso kann durch Ausspritzen der weiteren Kavität 41" die Rückseite des Rohlings 30 mit einer zusätzlichen Kunststoffschicht 31 umspritzt werden. Das Umspritzen des Rohlings 30 an der Vorderseite und an der Rückseite kann gleichzeitig, aber völlig unabhängig voneinander erfolgen. Dadurch ist es möglich den Spritzvorgang an der Vorderseite und an der Rückseite an die jeweils herrschenden Bedingungen anzupassen und jeden Spritzvorgang für sich zu optimieren. So kann die Qualität der fertigen Projektionslinse 7 weiter verbessert werden.

Das erfindungsgemäße Werkzeug zur Herstellung der Projektionslinse 7 nach dem erfindungsgemäßen Verfahren wird nachfolgend näher anhand der Figuren 4 bis 9 erläutert. Die Figur 4 zeigt schematisch jeweils ein Werkzeugteil zur Herstellung des Rohlings 30 in dem ersten Prozesstakt 21 sowie zum Umspritzen des Rohlings 30 mit einer zusätzlichen Kunststoffschicht 31 in dem zweiten Prozesstakt 22. Ein Pfeil 42 soll andeuten, dass der im ersten Prozesstakt 21 gespritzte Rohling 30 aus der Kavität 40 entnommen und in die weitere Kavität 41 eingesetzt, dort positioniert und gehalten wird, um in dem nachfolgenden Prozesstakt 22 den Rohling 30 mit einer zusätzlichen Kunststoffschicht 31 umspritzen zu können. Das Umsetzen des Rohlings 30 aus der ersten Kavität 40 in die weitere Kavität 41 erfolgt mittels einer geeigneten Transporteinheit, die bspw. als eine sogenannte Dreh-HubEinheit ausgebildet ist.

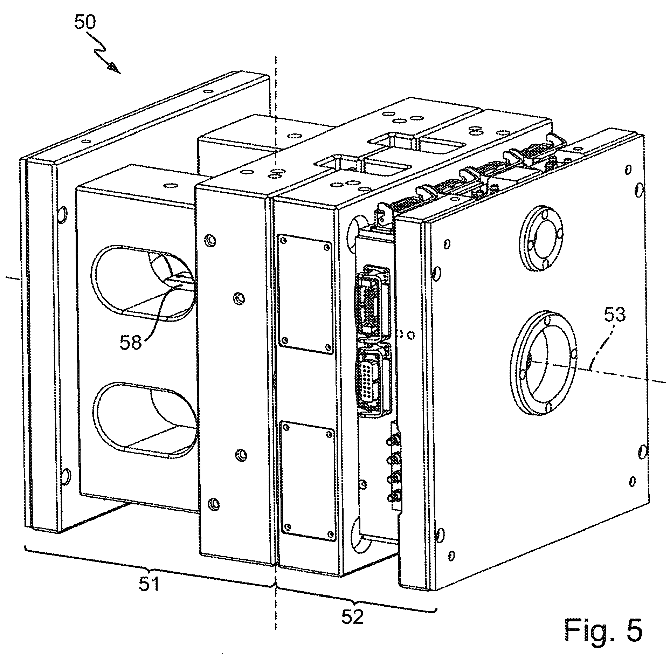

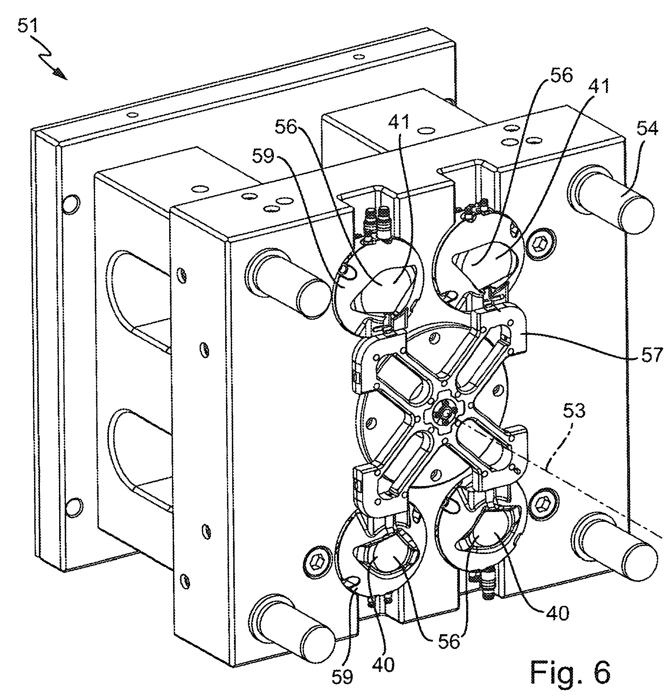

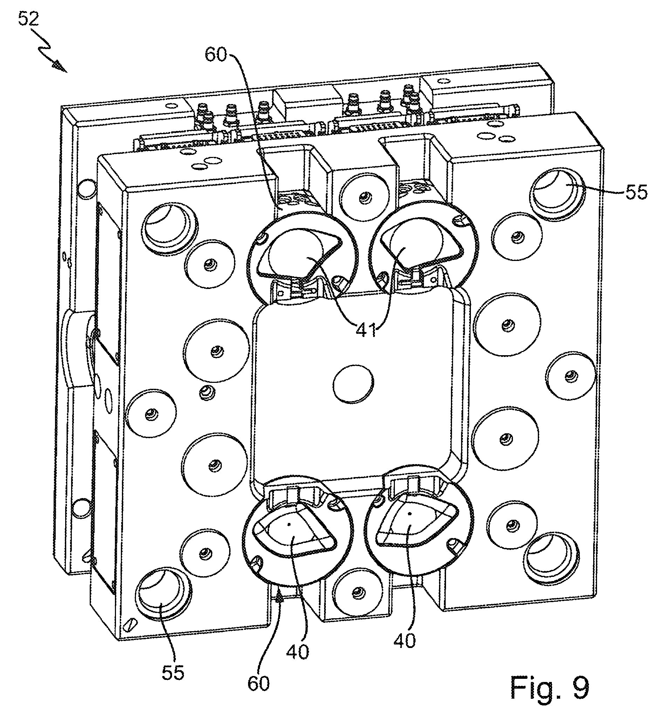

In Figur 5 ist das erfindungsgemäße Werkzeug zur Herstellung der erfindungsgemäßen Projektionslinse 7 nach dem erfindungsgemäßen Verfahren in seiner Gesamtheit mit dem Bezugszeichen 50 bezeichnet. Das Werkzeug 50 umfasst einen ersten Teil 51 sowie einen relativ zu diesem beweglichen zweiten Teil 52. Insbesondere kann das Werkzeug 50 durch eine Relativbewegung der Werkzeugteile 51, 52 weg voneinander entlang einer Bewegungslinie 53 zur Entnahme der spritzgegossenen Werkstücke geöffnet werden. Das erste Werkzeugteil 51 ist im Detail in den Figuren 6 bis 8 dargestellt. Eine Detailansicht des zweiten Werkstückteils 52 kann Figur 9 entnommen werden.

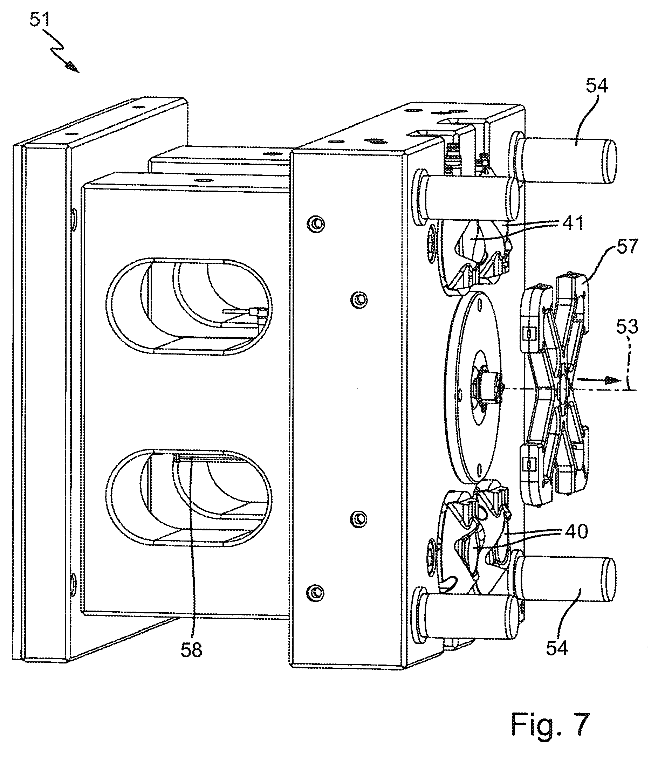

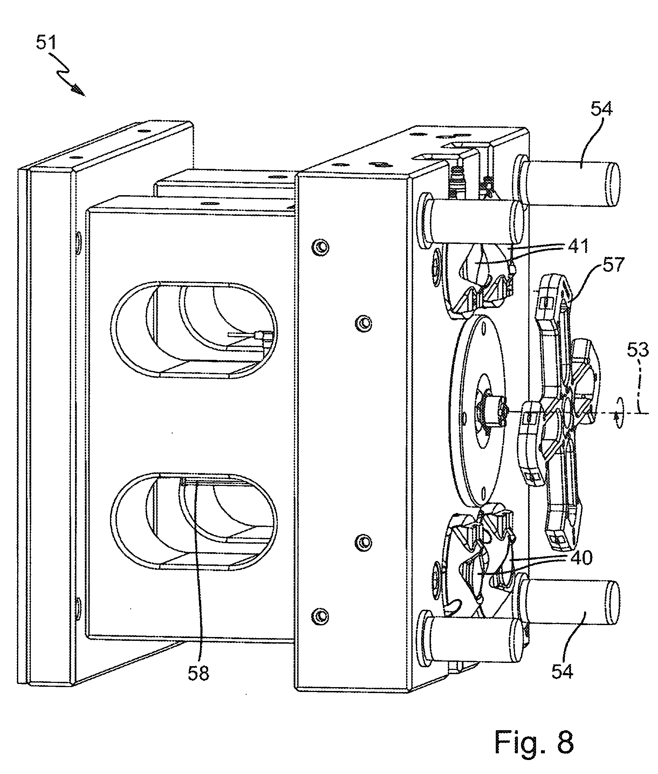

Das erste Werkzeugteil 51 verfügt über mehrere Führungsstifte 54, die beim Schließen des Werkzeugs 50 durch Aufeinanderzubewegen der beiden Werkzeugteile 51, 52 entlang der Bewegungsrichtung 53 in entsprechende Führungsöffnungen 55 an dem zweiten Werkzeugteil 52 eingreifen. Das erste Werkzeugteil 51 verfügt außerdem über insgesamt vier Kavitäten, wobei zwei erste Kavitäten 40 zum Spritzen des Rohlings 30 während des ersten Prozesstaktes 21 und um 180° um die Bewegungsachse 53 gedrehte zwei weitere Kavitäten 41 auf, in die der fertig gespritzte Rohling 30 eingesetzt wird und im Rahmen des zweiten Prozesstaktes 22 zumindest bereichsweise mit einer zusätzlichen Kunststoffschicht 31 umspritzt wird. Im Boden der Kavitäten 40, 41 sind flüssigkeitsführende Kanäle 56 erkennbar, die zur Variation der Temperatur der Kavitätswandungen während des Spritzgussprozesses und des Abkühlens des Werkstückes dienen. Während des Spritzvorgangs sollten die Wandungen der Kavitäten 40, 41 möglichst warm sein, um ein frühzeitiges Erkalten der Spritzgussmasse zu verhindern. Aus diesem Grund werden die Kanäle 56 mit etwa 140° Celsius warmer Flüssigkeit, insbesondere Wasser, durchströmt. Während des Abkühlens des gespritzten Werkstücks muss Wärme aus den Kavitäten 40, 41 abgeführt werden. Aus diesem Grund werden die Kanäle 56 mit etwa 40° Celsius kalter Flüssigkeit, insbesondere Wasser, durchströmt. Im Zentrum des ersten Werkstückteils 51 ist die Transporteinheit in Form einer um die Achse 53 drehbare und parallel zu dieser bewegbaren Drehhubeinheit 57 zu erkennen. Ein Antrieb der Drehhubeinheit 57 ist in Figur 5 gezeigt und mit dem Bezugszeichen 58 bezeichnet. Die Drehhubeinheit 57 umfasst einen Drehkreuz mit vier in einem Winkel von 90° relativ zueinander stehenden Greifarmen, welche die gespritzten Rohlinge 30 am Anguss greifen können. Durch eine Bewegung des Drehkreuzes der Drehhubeinheit 57 parallel zur Bewegungsachse 53 und weg von den Kavitäten 40, 41 (vgl. Figur 7) können die ergriffenen Rohlinge 30 aus den ersten Kavitäten 40 entnommen werden. Anschließend wird das Drehkreuz der Drehhubeinheit 57 um 180° um die Bewegungsachse 53 gedreht (vgl. Figur 8), so dass die gespritzten Rohlinge 30 oberhalb der weiteren Kavitäten 41 angeordnet sind. Dann wird das Drehkreuz der Drehhubeinheit 57 parallel zur Bewegungsachse 53 abgesenkt, so dass die Rohlinge in den weiteren Kavitäten 41 angeordnet sind. Gleichzeitig mit dem Ergreifen der fertig gespritzten Rohlinge 30 in den Kavitäten 40 durch zwei Greifarme des Drehkreuzes der Drehhubeinheit 57 ergreifen die beiden anderen Greifarme des Drehkreuzes die fertig gespritzten Projektionslinsen 7 in der Kavität 41 ebenfalls an deren Anguss. Während die Rohlinge 30 von den Kavitäten 40 in die Kavitäten 41 befördert werden, werden die fertigen Projektionslinsen 7 nach der Entnahme aus den weiteren Kavitäten 41 aus dem Werkzeug 50 entnommen und bspw. einer Weiterverarbeitung (z.B. Abtrennen des Angusses, Abschleifen von scharfen Kanten etc.) zugeführt.

Figur 9 zeigt das zweite Werkzeugteil 52, welches eine Düseneinheit mit mehreren Spritzeinheiten umfasst, über welche die erwärmte Kunststoffmasse während des Spritzvorgangs in die Kavitäten 40, 41 eingespritzt wird. Die Spritzeinheiten sind bspw. in Figur 4 mit dem Bezugszeichen 43 bezeichnet. Während das erste Werkzeugteil 51 erste Wandungen der Kavitäten 40, 41 aufweisen, umfasst das zweite Werkzeugteil 52 aus Figur 9 die entsprechenden zweiten Wandungen der Kavitäten 40, 41. Bei zusammengesetzten Werkzeugteilen 51, 52 (vgl. Figur 5) bilden also die Kavitätswandungen der beiden Werkzeugteile 51, 52 zusammen die Kavitäten 40, 41. Zusätzlich wird durch Aufsetzen des zweiten Werkzeugteils 52 auf das erste Werkzeugteil 51 ein in den weiteren Kavitäten 41 angeordneter Rohling 30 in der durch die Drehhubeinheit 57 bestimmten Position festgelegt, in dem der die eigentliche Linse 7' umlaufende Rand 7"' zwischen die beiden Werkzeugteile 51, 52 eingeklemmt wird. Das führt auch dazu, dass die Kavitäten 41 durch die daran angeordneten und gehaltenen Rohlinge 30 bzw. deren umlaufenden Rand 7"' in zwei Teilkavitäten 41', 41" unterteilt sind (vgl. Figur 4). Falls erforderlich, können auch die Wandungen der Kavitäten 40, 41 in dem zweiten Werkzeugteil 52 durch flüssigkeitsführende Kanäle erwärmt oder gekühlt werden.

Um ein Umrüsten des Werkzeugs 50 zur Fertigung anderer Projektionslinsen 7 möglichst schnell und einfach auszugestalten, sind in dem Werkzeug 50 bzw. in den ersten und zweiten Teilwerkzeugen 51, 52 die Wandungen der Kavitäten 40, 41 nicht direkt im Werkzeug 50 ausgebildet. Stattdessen sind in das Werkzeug zylinderförmige Aussparungen (Vertiefungen oder Bohrungen) eingebracht, in die geeignete Einsätze eingesetzt, positioniert und lösbar befestigt werden können. In den Einsätzen ist die gewünschte Form der Wandung der jeweiligen Kavität 40; 41 ausgebildet. Durch einfaches Auswechseln der Einsätze in den ersten und zweiten Werkzeugteilen 51, 52 kann also die Form der Kavitäten 40 bzw. 41 und damit auch die Form und Abmessungen der gefertigten Projektionslinsen 7 variiert werden. Die zylinderförmigen Vertiefungen oder Bohrungen in den ersten und zweiten Werkzeugteilen 51, 52 sind mit dem Bezugszeichen 59 in Figur 6 und Bezugszeichen 60 in Figur 9 bezeichnet.

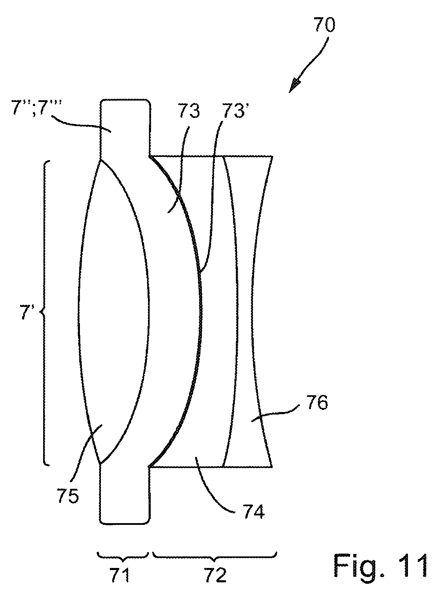

Die Erfindung könnte auch zur besonders einfachen und schnellen Herstellung einer einteiligen Doublet Linse, wie bspw. eines Achromaten, also eines optischen Elements zur Farbkorrektur eines optischen Systems eingesetzt werden. Der Aufbau sowie die Funktionsweise eines solchen Achromaten sind dem Fachmann bekannt. Die vorliegende Erfindung bietet aber eine ganz neue Möglichkeit der Herstellung solcher Achromaten. Ein solcher nach dem erfindungsgemäßen Verfahren hergestellter Achromat 70 ist beispielhaft in Figur 11 dargestellt. Ein Achromat 70 besteht bspw. aus einer Kombination einer Sammellinse 71 und einer Zerstreuungslinse 72.

Zur Herstellung dieser Linsenkombination ist der erste Prozesstakt 21 zweigeteilt. In einem ersten Teil des ersten Prozesstakts 21 wird ein erster Rohling 73 durch Einspritzen von plastifiziertem Kunststoff in eine erste Kavität gespritzt. Der Rohling 73 kann Bestandteil einer ersten optischen Linse, in dem dargestellten Beispiel der Sammellinse 71, des fertigen Achromaten 70 sein. Der erste Rohling 73 weist einen ebenfalls im ersten Teil des ersten Prozesstaktes 21 gespritzten äußeren, über den optisch wirksamen Bereich 7' der ersten optischen Linse 71 hinausragenden umlaufenden Rand 7"; 7"' auf. Eine Seite 73' des Rohlings 73 stellt später eine Grenzfläche zu der zweiten optischen Linse, in dem dargestellten Beispiel der Zerstreuungslinse 72, dar. Außerdem weist der erste Rohling 73 eine Grenzfläche 73' zu der zweiten optischen Linse, des Achromaten 70 auf. Der Rohling 73 besitzt in dem dargestellten Querschnitt im Wesentlichen eine konstante Dicke. Die Grenzfläche 73' weist eine gewünschte Qualität hinsichtlich Form, Abmessungen und/oder Oberflächenbeschaffenheit auf. Diese Fläche 73' muss sehr genau hergestellt werden, was durch die weitgehend konstante Dicke des Rohlings 73 problemlos möglich ist.

In einem zweiten Teil des ersten Prozesstakts 21 wird ein zweiter Rohling 74, der später Bestandteil der zweiten optischen Linse 72 ist, an die Grenzfläche 73' des ersten Rohlings 73 gespritzt. Das Material des ersten Rohlings 73 entspricht dem Material der ersten Linse 71 und das Material des zweiten Rohlings 74 entspricht dem Material der zweiten Linse 72. Üblicherweise werden bei Achromaten 70 unterschiedliche Materialien für die Linsen 71, 72 eingesetzt, um unterschiedliche Dispersionseigenschaften der Linsen 71, 72 zu erzielen. Der am Ende des ersten Prozesstaktes 21 vorliegende Rohling 30 besteht in diesem Fall also aus zwei Komponenten, dem ersten Rohling 73 und dem zweiten Rohling 74. Der Rohling 30, das heißt die Oberflächen der Rohlinge 73, 74, weisen zumindest bereichsweise eine mindere Qualität hinsichtlich Form, Abmessungen und/oder Oberflächenbeschaffenheit auf.

Um nun die geforderte oder gewünschte Qualität des Achromaten 70 zu erreichen, wird in einem weiteren Prozesstakt 22 der Rohling 30, bestehend aus dem ersten und dem zweiten Rohling 73, 74, mit seinem umlaufenden Rand 7", 7"' in einer zweiten Kavität des Formwerkzeugs 50 gehalten. Das Werkzeug 50 ist derart ausgebildet, dass der umlaufende Rand 7", 7"' die Kavität in zwei Teilkavitäten unterteilt. Das ermöglicht es, in dem zweiten Prozesstakt 22 zeitgleich Kunststoff in die vordere und die hintere Teilkavität einzuspritzen, um die Rohlinge 73, 74 in dem optisch wirksamen Bereich 7' des Achromaten 70 mit zusätzlichem Kunststoff zu umspritzen. Auf diese Weise entsteht die zusätzliche Kunststoffschicht 75 an der ersten optischen Linse 73 und die zusätzliche Kunststoffschicht 76 an der zweiten optischen Linse 74. Als Material für die Schicht 75 wird das für die erste Linse 71 vorgesehene Material (in der Regel das gleiche Material wie für den ersten Rohling 73) und für die Schicht 76 das für die zweite Linse 72 vorgesehene Material (in der Regel das gleiche Material wie für den zweiten Rohling 74) verwendet. Die erste optische Linse 71 wird also durch die gespritzten Bereich 73, 75 und die zweite Linse 72 durch die Bereiche 74, 76 gebildet. Durch die zusätzlich angespritzten Kunststoffschichten 75, 76 erhält der Achromat 70 zumindest im optisch wirksamen Bereich 7' die geforderte Qualität.

Das erfindungsgemäße Verfahren ermöglicht also auch eine besonders einfache, schnelle und kostengünstige Herstellung von Achromaten 70, ohne Einbußen bei der Genauigkeit.

## Patentansprüche

1. Verfahren zum Herstellen eines optischen Elements aus Kunststoff, insbesondere einer optischen Linse (7) einer Kraftfahrzeugbeleuchtungseinrichtung, mittels Spritzgießen, mit
- einem ersten Prozesstakt (21), in dem ein Rohling (30) des optischen Elements (7), der zumindest bereichsweise eine mindere Qualität hinsichtlich Form, Abmessungen und/oder Oberflächenbeschaffenheit aufweist, durch Spritzgießen hergestellt wird, und
- mindestens einem weiteren Prozesstakt (22, 23), in dem der Rohling (30) zumindest an einem Teil der Bereiche von minderer Qualität mit einer zusätzlichen Schicht (31) aus Kunststoff umspritzt wird,
- wobei das optische Element (7) erst nach dem letzten weiteren Prozesstakt (22; 23) durch Umspritzen des Rohlings (30) mit der zusätzlichen Schicht (31) eine gewünschte Qualität hinsichtlich Form, Abmessungen und/oder Oberflächenbeschaffenheit aufweist, - wobei der Rohling (30) in dem ersten Prozesstakt (21) mit einem äußeren, über einen optisch wirksamen Bereich (7') des fertigen optischen Elements (7) hinausragenden umlaufenden Rand (7"; 7"') gespritzt wird, der im nachfolgenden mindestens einen weiteren Prozesstakt (22, 23) zur Halterung und Positionierung des Rohlings (30) in einer auszuspritzenden Kavität (41) eines Formwerkzeugs (50) genutzt wird, **dadurch gekennzeichnet, dass** der äußere, über den optisch wirksamen Bereich (7') des fertigen optischen Elements (7) hinausragende umlaufende Rand (7"') im nachfolgenden mindestens einen weiteren Prozesstakt (22, 23) für eine Unterteilung der auszuspritzenden Kavität (41) in eine erste, an der Vorderseite des Rohlings (30) angeordnete Teilkavität (41') und eine weitere, an der Rückseite des Rohlings (30) angeordnete Teilkavität (41") genutzt wird, und dass ein Spritzgussvorgang für die an der Vorderseite des Rohlings (30) anzuspritzende zusätzliche Schicht (31) aus Kunststoff einerseits und ein Spritzgussvorgang für die an der Rückseite des Rohlings (30) anzuspritzende zusätzliche Schicht (31) aus Kunststoff andererseits zeitgleich ausgeführt, aber jeder Spritzgussvorgang für sich individuell gesteuert bzw. geregelt wird.

2. Verfahren nach Anspruch 1, **dadurch gekennzeichnet, dass** der im ersten Prozesstakt (21) gespritzte Rohling (30) in einem Querschnitt betrachtet eine im Wesentlichen konstante Dicke aufweist.

3. Verfahren nach Anspruch 1 oder 2, **dadurch gekennzeichnet, dass** der Rohling (30) in dem mindestens einen weiteren Prozesstakt (22, 23) zumindest in einem optisch wirksamen Bereich (7') des fertigen optischen Elements (7) mit der zusätzlichen Schicht (31) aus Kunststoff umspritzt wird.

4. Mittels Spritzgießen hergestelltes optisches Element (7) aus Kunststoff, **dadurch gekennzeichnet, dass** das optische Element (7) nach einem Verfahren gemäß einem der Ansprüche 1 bis 3 hergestellt ist.

5. Optisches Element (7) nach Anspruch 4, **dadurch gekennzeichnet, dass** das optische Element als eine Kunststofflinse (7) einer Kraftfahrzeugbeleuchtungseinrichtung ausgebildet ist.

6. Optisches Element (7) nach Anspruch 5, **dadurch gekennzeichnet, dass** das optische Element als eine Projektionslinse (7) eines Projektionsmoduls (1) eines Kraftfahrzeugscheinwerfers ausgebildet ist.

7. Optisches Element (7) nach Anspruch 6, **dadurch gekennzeichnet, dass** das optische Element (7) als ein insbesondere aus einer Kombination von zwei Linsen bestehender Achromat ausgebildet ist.

8. Werkzeug (50) zur Herstellung eines optischen Elements (7) aus Kunststoff, insbesondere einer optischen Linse (7) einer Kraftfahrzeugbeleuchtungseinrichtung, mittels Spritzgießen, wobei das Werkzeug (50) aufweist:
- mindestens eine erste, in einem ersten Prozesstakt (21) zur Herstellung eines Rohlings (30) des optischen Elements (7) von minderer Qualität hinsichtlich Form, Abmessungen und/oder Oberflächenbeschaffenheit mit Kunststoff auszuspritzende Kavität (40),
- mindestens eine weitere Kavität (41), in der in einem weiteren Prozesstakt (22; 23) der Rohling (30) anordnenbar und zumindest bereichsweise mit einer zusätzlichen Schicht (31) aus Kunststoff umspritzbar ist, und
- eine Transporteinheit (57), um den in dem ersten Prozesstakt (21) gespritzten mindestens einen Rohling (30) bzw. den in einem weiteren Prozesstakt (22; 23) mit einer zusätzlichen Schicht (31) umspritzten mindestens einen Rohling (30) aus der dem aktuellen Prozesstakt (21; 22) zugeordneten Kavität (40; 41) in eine weitere, dem nachfolgenden Prozesstakt (22) zugeordnete Kavität (41) zu transportieren, - wobei die mindestens eine erste Kavität (40) derart ausgebildet ist, dass der Rohling (30) nach dem ersten Prozesstakt (21) einen äußeren, über einen optisch wirksamen Bereich (7') des fertigen optischen Elements (7) hinausragenden umlaufenden Rand (7"; 7"') aufweist, und- wobei die mindestens eine weitere Kavität (41) derart ausgebildet ist, dass der Rohling (30) in dem nachfolgenden mindestens einen weiteren Prozesstakt (22, 23) in der auszuspritzenden Kavität (41) mittels des umlaufenden Rands (7"; 7'") gehalten und positioniert ist, **dadurch gekennzeichnet, dass** die mindestens eine weitere Kavität (41) des Werkzeugs (50) derart ausgebildet ist, dass sie bei in der mindestens einen weiteren Kavität (41) positioniertem und gehaltenem Rohling (30) durch den äußeren, über den optisch wirksamen Bereich (7') des fertigen optischen Elements (7) hinausragenden umlaufenden Rand (7"') des Rohlings (30) in eine erste, an der Vorderseite des Rohlings (30) angeordnete Teilkavität (41') und eine weitere, an der Rückseite des Rohlings (30) angeordnete Teilkavität (41") unterteilt ist, und dass ein Spritzgussvorgang für die an der Vorderseite des Rohlings (30) anzuspritzende zusätzliche Schicht (31) aus Kunststoff einerseits und ein Spritzgussvorgang für die an der Rückseite des Rohlings (30) anzuspritzende zusätzliche Schicht (31) aus Kunststoff andererseits zeitgleich ausführbar, aber jeder Spritzgussvorgang für sich individuell steuerbar bzw. regelbar ist.

9. Werkzeug (50) nach Anspruch 8, **dadurch gekennzeichnet, dass** das Werkzeug (50) eine erste Spritzeinheit (43) aufweist, welche in dem ersten Prozesstakt (21) zur Fertigung des Rohlings (30) Kunststoff in die mindestens eine erste Kavität (40) spritzt.

10. Werkzeug (50) nach Anspruch 8 oder 9, **dadurch gekennzeichnet, dass** das Werkzeug (50) eine zweite Spritzeinheit (43), welche in dem mindestens einen weiteren Prozesstakt (22; 23) zum zumindest bereichsweise Umspritzen des Rohlings (30) Kunststoff in die erste Teilkavität (41') spritzt, und eine dritte Spritzeinheit aufweist, welche in dem mindestens einen weiteren Prozesstakt (22; 23) zum zumindest bereichsweise Umspritzen des Rohlings (30) Kunststoff in die weitere Teilkavität (41") spritzt.

11. Werkzeug (50) nach einem der Ansprüche 8 bis 10, **dadurch gekennzeichnet, dass** die mindestens eine erste Kavität (40) und die mindestens eine weitere Kavität (41) um einen gemeinsamen Mittelpunkt herum, um einen vorgegebenen Drehwinkel zueinander versetzt in dem Werkzeug (50) ausgebildet sind, wobei die Transporteinheit (57) als eine um eine durch den Mittelpunkt verlaufende Achse (53) drehbare und parallel zu der Achse (53) bewegbare Drehhubeinheit ausgebildet ist.

12. Werkzeug (50) nach einem der Ansprüche 8 bis 11, **dadurch gekennzeichnet, dass** die Kavitäten (40, 41) durch in das Werkzeug (50) einsetzbare, entsprechend geformte Einsatzelemente gebildet sind.

13. Werkzeug (50) nach Anspruch 12, **dadurch gekennzeichnet, dass** in dem Werkzeug (50) Aufnahmeelemente (59, 60), insbesondere Vertiefungen, zur Aufnahme der Einsatzelemente ausgebildet sind, wobei die Einsatzelemente außen in Form, Abmessungen und/oder Ausgestaltung den Aufnahmeelementen (59, 60) entsprechend ausgestaltet sind, so dass je nach Form, Abmessungen und/oder Oberflächenbeschaffenheit des zu fertigenden optischen Elements (7) aus einer Auswahl mehrerer verschiedener Einsatzelemente zur Bildung unterschiedlicher Kavitäten (40, 41) geeignete Einsatzelemente auswählbar und in die Aufnahmeelemente (59, 60) einsetzbar sind.

14. Werkzeug (50) nach einem der Ansprüche 8 bis 13, **dadurch gekennzeichnet, dass** das Werkzeug (50) Mittel zur Variation der Temperatur der mindestens einen ersten Kavität (40) und/oder der mindestens einen weiteren Kavität (41) aufweist.

15. Werkzeug (50) nach Anspruch 14, **dadurch gekennzeichnet, dass** die Mittel zur Variation der Temperatur flüssigkeitsführende Kanäle (56) in Wänden des Werkzeugs (50) umfassen, welche die mindestens eine erste Kavität (40) und/oder die mindestens eine weitere Kavität (41) umgeben.

## Claims

1. Method for producing an optical element made of plastic, in particular an optical lens (7) of a motor vehicle lighting device, by means of injection moulding, comprising
- a first process cycle (21), in which a blank (30) of the optical element (7), which has at least in some regions a lesser quality in terms of shape, dimensions and/or surface finish, is produced by injection moulding, and
- at least one further process cycle (22, 23), in which the blank (30) is overmoulded with an additional layer (31) of plastic at least on some of the regions of lesser quality,
- wherein the optical element (7) has a desired quality in terms of shape, dimensions and/or surface finish only after the last further process cycle (22; 23) as a result of overmoulding the blank (30) with the additional layer (31),
- wherein the blank (30) in the first process cycle (21) is injected with an outer peripheral edge (7"; 7"') which projects beyond an optically effective region (7') of the finished optical element (7), which edge is used in the subsequent at least one further process cycle (22, 23) for holding and positioning the blank (30) in a cavity (41) of a moulding tool (50), which cavity is to be injected, **characterized in that** the outer peripheral edge (7"') which projects beyond the optically effective region (7') of the finished optical element (7) is used in the subsequent at least one further process cycle (22, 23) for dividing the cavity (41) that is to be used for the injection moulding into a first part-cavity (41') arranged on the front side of the blank (30) and a further part-cavity (41") arranged on the rear side of the blank (30), and **in that** an injection moulding operation for the additional layer (31) of plastic to be injected onto the front side of the blank (30) on the one hand and an injection moulding operation for the additional layer (31) of plastic to be injected onto the rear side of the blank (30) on the other hand are carried out simultaneously, but each injection moulding operation is controlled or adjusted individually per se.

2. Method according to claim 1, **characterized in that** the blank (30) injection-moulded in the first process cycle (21) has a substantially constant thickness as seen in cross-section.

3. Method according to claim 1 or 2, **characterized in that** the blank (30) in the at least one further process cycle (22, 23) is overmoulded with the additional layer (31) of plastic at least in an optically effective region (7') of the finished optical element (7).

4. Optical element (7) made of plastic and produced by means of injection moulding, **characterized in that** the optical element (7) is produced by a method according to any one of claims 1 to 3.

5. Optical element (7) according to claim 4, **characterized in that** the optical element is configured as a plastic lens (7) of a motor vehicle lighting device.

6. Optical element (7) according to claim 5, **characterized in that** the optical element is configured as a projection lens (7) of a projection module (1) of a motor vehicle headlamp.

7. Optical element (7) according to claim 6, **characterized in that** the optical element (7) is configured as an achromatic lens which consists in particular of a combination of two lenses.

8. Tool (50) for producing an optical element (7) made of plastic, in particular an optical lens (7) of a motor vehicle lighting device, by means of injection moulding, wherein the tool (50) has:
- at least a first cavity (40) that is to be injected with plastic in a first process cycle (21) in order to produce a blank (30) of the optical element (7) of lesser quality in terms of shape, dimensions and/or surface finish,
- at least one further cavity (41) in which, in a further process cycle (22; 23), the blank (30) can be arranged and can be overmoulded with an additional layer (31) of plastic at least in some regions, and
- a transport unit (57) for transporting the at least one blank (30) injection-moulded in the first process cycle (21) or the at least one blank (30) overmoulded with an additional layer (31) in a further process cycle (22; 23) from the cavity (40; 41) assigned to the current process cycle (21; 22) into a further cavity (41) assigned to the subsequent process cycle (22),
- wherein the at least one first cavity (40) is configured in such a way that the blank (30) after the first process cycle (21) has an outer peripheral edge (7"; 7"') which projects beyond an optically effective region (7') of the finished optical element (7), and
- wherein the at least one further cavity (41) is configured in such a way that the blank (30) in the subsequent at least one further process cycle (22, 23) is held and positioned by means of the peripheral edge (7"; 7"') in the cavity (41) that is to be injected,
**characterized in that** the at least one further cavity (41) of the tool (50) is configured in such a way that, when the blank (30) is positioned and held in the at least one further cavity (41), the latter is divided by the outer peripheral edge (7"') of the blank (30) which projects beyond the optically effective region (7') of the finished optical element (7) into a first part-cavity (41') arranged on the front side of the blank (30) and a further part-cavity (41") arranged on the rear side of the blank (30), and **in that** an injection moulding operation for the additional layer (31) of plastic to be injected onto the front side of the blank (30) on the one hand and an injection moulding operation for the additional layer (31) of plastic to be injected onto the rear side of the blank (30) on the other hand can be carried out simultaneously, but each injection moulding operation can be controlled or adjusted individually per se.

9. Tool (50) according to claim 8, **characterized in that** the tool (50) has a first injection unit (43) which injects plastic into the at least one first cavity (40) in the first process cycle (21) in order to produce the blank (30).

10. Tool (50) according to claim 8 or 9, **characterized in that** the tool (50) has a second injection unit (43) which injects plastic into the first part-cavity (41') in the at least one further process cycle (22; 23) in order to overmould the blank (30) at least in some regions, and a third injection unit which injects plastic into the further part-cavity (41") in the at least one further process cycle (22; 23) in order to overmould the blank (30) at least in some regions.

11. Tool (50) according to any one of claims 8 to 10, **characterized in that** the at least one first cavity (40) and the at least one further cavity (41) are offset from one another in the tool (50) by a predefined angle of rotation about a common centre point, wherein the transport unit (57) is configured as a rotating lifting unit which is able to rotate about an axis (53) running through the centre point and is able to move parallel to the axis (53).

12. Tool (50) according to any one of claims 8 to 11, **characterized in that** the cavities (40, 41) are formed by suitably shaped insert elements which can be inserted into the tool (50).

13. Tool (50) according to claim 12, **characterized in that** receiving elements (59, 60), in particular depressions, for receiving the insert elements are formed in the tool (50), wherein the insert elements are configured externally to correspond to the receiving elements (59, 60) in terms of shape, dimensions and/or design, so that, depending on the shape, dimensions and/or surface finish of the optical element (7) that is to be produced, suitable insert elements can be chosen from a selection of multiple different insert elements for forming different cavities (40, 41) and can be inserted into the receiving elements (59, 60).

14. Tool (50) according to any one of claims 8 to 13, **characterized in that** the tool (50) has means for varying the temperature of the at least one first cavity (40) and/or of the at least one further cavity (41).

15. Tool (50) according to claim 14, **characterized in that** the means for varying the temperature comprise liquid-carrying channels (56) in walls of the tool (50) which surround the at least one first cavity (40) and/or the at least one further cavity (41).

## Revendications

1. Procédé de fabrication d'un élément optique en plastique, en particulier d'une lentille optique (7) d'un dispositif d'éclairage de véhicule automobile, par moulage par injection avec
- un premier temps de processus (21), dans lequel une ébauche (30) de l'élément optique (7) qui présente au moins par endroits une qualité moindre en ce qui concerne la forme, les dimensions et/ou la nature de surface, est fabriquée par moulage par injection et
- au moins un autre temps de processus (22, 23), dans lequel l'ébauche (30) est injectée au moins sur une partie des zones de qualité moindre avec une couche supplémentaire (31) en plastique,
- l'élément optique (7) ne présentant qu'après l'autre dernier temps de processus (22 ; 23) par injection de l'ébauche (30) avec la couche supplémentaire (31) une qualité souhaitée en ce qui concerne la forme, les dimensions et/ou la nature de surface,
- l'ébauche (30) étant injectée dans le premier temps de processus (21) avec un bord (7"; 7"') extérieur, courbé dépassant au-delà d'une zone active optiquement (7') de l'élément optique fini (7) qui est utilisé dans au moins un autre temps de processus suivant (22, 23) pour la fixation et le positionnement de l'ébauche (30) dans une cavité (41) à éjecter d'un outil de formage (50), **caractérisé en ce que** le bord (7"') extérieur, courbé dépassant au-delà de la zone active optiquement (7') de l'élément optique fini (7) est utilisé dans au moins un autre temps de processus suivant (22, 23) pour une division de la cavité à éjecter (41) en une première cavité partielle (41') agencée sur le côté avant de l'ébauche (30) et en une autre cavité partielle (41") agencée sur le côté arrière de l'ébauche (30), et **en ce qu'**un processus de moulage par injection pour la couche (31) supplémentaire à injecter sur le côté avant de l'ébauche (30) en plastique d'une part et un processus de moulage par injection pour la couche (31) supplémentaire à injecter sur le côté arrière de l'ébauche (30) en plastique d'autre part sont réalisés simultanément mais chaque processus de moulage par injection est commandé ou régulé pour lui-même individuellement.

2. Procédé selon la revendication 1, **caractérisé en ce que** l'ébauche (30) injectée dans le premier temps de processus (21) présente, vu en section transversale, une épaisseur sensiblement constante.

3. Procédé selon la revendication 1 ou 2, **caractérisé en ce que** l'ébauche (30) est injectée dans l'au moins un autre temps de processus (22, 23) au moins dans une zone (7') active optiquement de l'élément optique fini (7) avec la couche supplémentaire (31) en plastique.

4. Elément optique fabriqué par moulage par injection (7) en plastique, **caractérisé en ce que** l'élément optique (7) est fabriqué selon un procédé selon l'une quelconque des revendications 1 à 3.

5. Elément optique (7) selon la revendication 4, **caractérisé en ce que** l'élément optique est réalisé comme une lentille plastique (7) d'un dispositif d'éclairage de véhicule automobile.

6. Elément optique (7) selon la revendication 5, **caractérisé en ce que** l'élément optique est réalisé comme une lentille de projection (7) d'un module de projection (1) d'un phare de véhicule automobile.

7. Elément optique (7) selon la revendication 6, **caractérisé en ce que** l'élément optique (7) est réalisé comme un achromate composé en particulier en une combinaison de deux lentilles.

8. Outil (50) pour la fabrication d'un élément optique (7) en plastique, en particulier d'une lentille optique (7) d'un dispositif d'éclairage de véhicule automobile, par moulage par injection, l'outil (50) présentant :
- au moins une première cavité (40) à éjecter dans un premier temps de processus (21) pour la fabrication d'une ébauche (30) de l'élément optique (7) de qualité moindre en ce qui concerne la forme, les dimensions et/ou la nature de surface avec du plastique,
- au moins une autre cavité (41), dans laquelle dans un autre temps de processus (22 ; 23), l'ébauche (30) peut être agencée et injectée au moins par endroits avec une couche supplémentaire (31) en plastique, et
- une unité de transport (57) afin de transporter l'au moins une ébauche (30) injectée dans le premier temps de processus (21) ou l'au moins une ébauche (30) injectée dans un autre temps de processus (22 ; 23) avec une couche supplémentaire (31) hors de la cavité (40 ; 41) associée au temps de processus actuel (21 ; 22) dans une autre cavité (41) associée au temps de processus (22) suivant,
- l'au moins une première cavité (40) étant réalisée de telle manière que l'ébauche (30) présente après le premier temps de processus (21) un bord (7"; 7"') extérieur, courbé dépassant au-delà d'une zone (7') active optiquement de l'élément optique fini (7), et
- l'au moins une autre cavité (41) étant réalisée de telle manière que l'ébauche (30) soit maintenue et positionnée dans l'au moins un autre temps de processus (22, 23) suivant dans la cavité à éjecter (41) à l'aide du bord courbé (7"; 7"'), **caractérisé en ce que** l'au moins une autre cavité (41) de l'outil (50) est réalisée de telle manière qu'elle soit divisée pour une ébauche (30) maintenue et positionnée dans l'au moins une autre cavité (41) par le bord (7"') extérieur, courbé dépassant au-delà de la zone active optiquement (7') de l'élément optique fini (7) de l'ébauche (30) en une première cavité partielle (41') agencée sur le côté avant de l'ébauche (30) et en une autre cavité partielle (41") agencée sur le côté arrière de l'ébauche (30), et **en ce qu'**un processus de moulage par injection pour la couche (31) supplémentaire à injecter sur le côté avant de l'ébauche (30) en plastique d'une part et un processus de moulage par injection pour la couche (31) supplémentaire à injecter sur le côté arrière de l'ébauche (30) en plastique d'autre part sont réalisables simultanément mais chaque processus de moulage par injection est commandable ou régulable pour lui-même individuellement.

9. Outil (50) selon la revendication 8, **caractérisé en ce que** l'outil (50) présente une première unité d'injection (43) qui injecte du plastique dans l'au moins une première cavité (40) dans le premier temps de processus (21) pour la fabrication de l'ébauche (30).

10. Outil (50) selon la revendication 8 ou 9, **caractérisé en ce que** l'outil (50) présente une deuxième unité d'injection (43) qui injecte du plastique dans la première cavité partielle (41') dans l'au moins un autre temps de processus (22 ; 23) pour l'injection au moins par endroits de l'ébauche (30), et une troisième unité d'injection qui injecte du plastique dans l'autre cavité partielle (41") dans l'au moins un autre temps de processus (22 ; 23) pour l'injection au moins par endroits de l'ébauche (30).

11. Outil (50) selon l'une quelconque des revendications 8 à 10, **caractérisé en ce que** l'au moins une première cavité (40) et l'au moins une autre cavité (41) sont réalisées dans l'outil (50) en déport d'un angle de rotation prescrit l'une à l'autre, autour d'un point médian commun, l'unité de transport (57) étant réalisée comme une unité de levage et de rotation mobile parallèlement à l'axe (53) et rotative autour d'un axe (53) s'étendant au travers du point médian.

12. Outil (50) selon l'une quelconque des revendications 8 à 11, **caractérisé en ce que** les cavités (40, 41) sont formées par des éléments d'insertion formés en conséquence, insérables dans l'outil (50).

13. Outil (50) selon la revendication 12, **caractérisé en ce que** des éléments de réception (59, 60), en particulier des cavités, sont réalisés dans l'outil (50) pour la réception des éléments d'insertion, la forme, les dimensions et/ou la configuration des éléments d'insertion étant réalisée selon les éléments de réception (59, 60) à l'extérieur de sorte que selon la forme, les dimensions et/ou la nature de surface de l'élément optique fini (7), des éléments d'insertion appropriés pour la formation de différentes cavités (40, 41) puissent être sélectionnés dans une sélection de plusieurs éléments d'insertion différents et insérés dans les éléments de réception (59, 60).

14. Outil (50) selon l'une quelconque des revendications 8 à 13, **caractérisé en ce que** l'outil (50) présente des moyens pour la variation de la température de l'au moins une première cavité (40) et/ou de l'au moins une autre cavité (41).

15. Outil (50) selon la revendication 14, **caractérisé en ce que** les moyens pour la variation de la température comportent des canaux acheminant du liquide (56) dans des parois de l'outil (50) qui entourent l'au moins une première cavité (40) et/ou l'au moins une autre cavité (41).
